# EUROPEAN PATENT APPLICATION

(11) **EP 4 746 561 A1**
(43) Date of publication of application: **20.05.2026**
(21) Application number: 24840069.9
(22) Date of filing: 09.07.2024
(51) Int. Cl.: H04W 72/25, H04L 27/26, H04L 5/06, H04W 74/0816

(54) **METHOD AND DEVICE FOR APPLYING CYCLIC PREFIX EXTENSION IN DEVICE-TO-DEVICE COMMUNICATION OVER UNLICENSED BAND IN WHICH BASE STATION PERFORMS DEVICE-TO-DEVICE COMMUNICATION RESOURCE ALLOCATION**

(30) Priority: 11.07.2023 KR 20230089852; 08.08.2023 US 202363531549 P; 07.11.2023 KR 20230153055
(71) Applicant: LG Electronics Inc., Yeongdeungpo-gu Seoul 07336 (KR)
(72) Inventor: HWANG, Daesung, Seoul 06772 (KR); LEE, Seungmin, Seoul 06772 (KR)
(74) Representative: Maikowski & Ninnemann Patentanwälte Partnerschaft mbB
(86) International application number: PCT/KR2024/009796
(87) International publication number: WO 2025/014259

(57) **Abstract**

Proposed is a method for operation of a first device (100) in a wireless communication system. The method comprises a step of determining to perform device-to-device transmission on the basis that a time interval from an end time point of a first resource at which information regarding a second resource for performing the device-to-device transmission is received from a base station (300) to a start time point of the second resource is greater than or equal to a device processing time, wherein the device processing time may include the longest extension time from among a plurality of extension times associated with cyclic prefix extensions allowed for the device-to-device transmission.

## Description

### TECHNICAL FIELD

This disclosure relates to a wireless communication system.

### BACKGROUND ART

5G NR is the next generation technology of long term evolution (LTE) and is a new clean-slate form mobile communication system with high performance, low latency, and high availability. 5G NR may utilize all available spectrum resources, from the low frequency bands below 1 GHz to the mid-frequency bands from 1 GHz to 10 GHz and the high frequency (millimeter wave) bands above 24 GHz.

The 6G (wireless communication) system is aimed at (i) very high data rates per device, (ii) a very large number of connected devices, (iii) global connectivity, (iv) very low latency, (v) lowering energy consumption for battery-free internet of things (IoT) devices, (vi) ultra-reliable connectivity, and (vii) connected intelligence with machine learning capabilities. The vision of the 6G system may be in four aspects: intelligent connectivity, deep connectivity, holographic connectivity, and ubiquitous connectivity, and the 6G system may satisfy the requirements as shown in Table 1 below. For example, Table 1 may represent an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

According to an embodiment of the present disclosure, a method for performing, by a first device, wireless communication may be proposed. For example, the method may comprise: receiving, from a base station, information for a second resource for performing an inter-device transmission, based on a first resource; and determining to perform the inter-device transmission, based on a time interval from an end time point of the first resource to a start time point of the second resource being greater than or equal to a device processing time, wherein the device processing time may include a first extension time related to cyclic prefix extension, and wherein the first extension time may be a longest extension time among a plurality of extension times related to cyclic prefix extension allowed to the inter-device transmission.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: receiving, from a base station, information for a second resource for performing an inter-device transmission, based on a first resource; and determining to perform the inter-device transmission, based on a time interval from an end time point of the first resource to a start time point of the second resource being greater than or equal to a device processing time, wherein the device processing time may include a first extension time related to cyclic prefix extension, and wherein the first extension time may be a longest extension time among a plurality of extension times related to cyclic prefix extension allowed to the inter-device transmission.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: receiving, from a base station, information for a second resource for performing an inter-UE transmission, based on a first resource; and determining to perform the inter-UE transmission, based on a time interval from an end time point of the first resource to a start time point of the second resource being greater than or equal to a UE processing time, wherein the UE processing time may include a first extension time related to cyclic prefix extension, and wherein the first extension time may be a longest extension time among a plurality of extension times related to cyclic prefix extension allowed to the inter-UE transmission.

According to an embodiment of the present disclosure, a non-transitory computer-readable storage medium storing instructions may be proposed. For example, based on being executed, the instructions may cause a first device to: receive, from a base station, information for a second resource for performing an inter-device transmission, based on a first resource; and determine to perform the inter-device transmission, based on a time interval from an end time point of the first resource to a start time point of the second resource being greater than or equal to a device processing time, wherein the device processing time may include a first extension time related to cyclic prefix extension, and wherein the first extension time may be a longest extension time among a plurality of extension times related to cyclic prefix extension allowed to the inter-device transmission.

According to an embodiment of the present disclosure, a method for performing, by a second device, wireless communication may be proposed. For example, the method may comprise: receiving, from a first device, an inter-device transmission, based on a second resource, wherein the inter-device transmission may be determined to be performed based on a time interval from an end time point of a first resource to a start time point of the second resource being greater than or equal to a device processing time, wherein the first resource may be a resource in which information for the second resource is received from a base station to the first device, wherein the device processing time may include a first extension time related to cyclic prefix extension, and wherein the first extension time may be a longest extension time among a plurality of extension times related to cyclic prefix extension allowed to the inter-device transmission.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: receiving, from a first device, an inter-device transmission, based on a second resource, wherein the inter-device transmission may be determined to be performed based on a time interval from an end time point of a first resource to a start time point of the second resource being greater than or equal to a device processing time, wherein the first resource may be a resource in which information for the second resource is received from a base station to the first device, wherein the device processing time may include a first extension time related to cyclic prefix extension, and wherein the first extension time may be a longest extension time among a plurality of extension times related to cyclic prefix extension allowed to the inter-device transmission.

### BRIEF DESCRIPTION OF THE DRAWINGS

FIG. 1 shows a communication structure that can be provided in a 6G system, according to one embodiment of the present disclosure.
FIG. 2 shows an electromagnetic spectrum, according to one embodiment of the present disclosure.
FIG. 3 shows an example of an NTN typical scenario based on a transparent payload, according to one embodiment of the present disclosure.
FIG. 4 shows an example of an NTN typical scenario based on a regenerative payload, according to one embodiment of the present disclosure.
FIG. 5 shows an example of a sensing operation, according to one embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows an example of a wireless communication system supporting an unlicensed band, based on an embodiment of the present disclosure.
FIG. 10 shows a method of occupying resources in an unlicensed band, based on an embodiment of the present disclosure.
FIG. 11 shows a case in which a plurality of LBT-SBs are included in an unlicensed band, based on an embodiment of the present disclosure.
FIG. 12 shows CAP operations performed by a base station to transmit a downlink signal through an unlicensed band, based on an embodiment of the present disclosure.
FIG. 13 shows type 1 CAP operations performed by a UE to transmit an uplink signal, based on an embodiment of the present disclosure.
FIG. 14 shows a procedure in which a device determines whether to perform an inter-UE transmission (e.g., SL transmission) based on the UE processing time according to an embodiment of the present disclosure.
FIG. 15 shows a method for determining a longest extension time according to a numerology according to an embodiment of the present disclosure.
FIG. 16 shows a procedure in which a first device performs wireless communication according to an embodiment of the present disclosure.
FIG. 17 shows a procedure in which a second device performs wireless communication according to an embodiment of the present disclosure.
FIG. 18 shows a communication system 1, based on an embodiment of the present disclosure.
FIG. 19 shows wireless devices, based on an embodiment of the present disclosure.
FIG. 20 shows a signal process circuit for a transmission signal, based on an embodiment of the present disclosure.
FIG. 21 shows another example of a wireless device, based on an embodiment of the present disclosure.
FIG. 22 shows a hand-held device, based on an embodiment of the present disclosure.
FIG. 23 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

In this specification, being "configured or defined" may be interpreted as being configured or pre-configured to a device via predefined signaling (e.g., SIB, MAC, RRC) from a base station or network. In this specification, being "configured or defined" may be interpreted as being pre-configured to a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

The technologies proposed in this specification may be implemented in 6G wireless technologies and may be applied to various 6G systems. For example, 6G systems may include key factors such as enhanced mobile broadband (eMBB), ultra-reliable low latency communications (URLLC), massive machine-type communication (mMTC), artificial intelligence (AI) integrated communication, tactile internet, and high throughput, high network capacity, high energy efficiency, low backhaul and access network congestion, and enhanced data security.

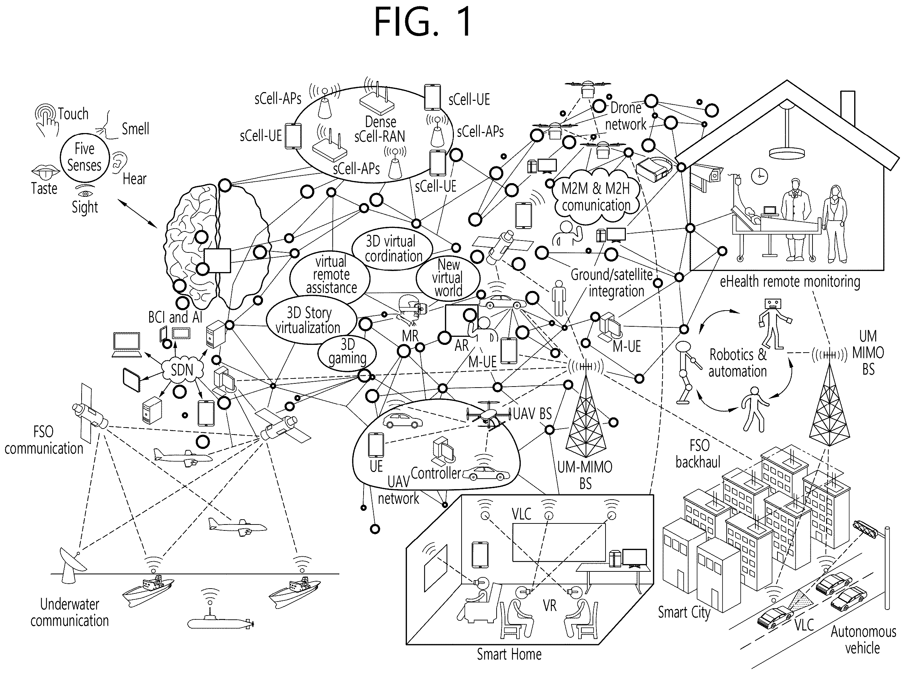

FIG. 1 shows a communication structure that can be provided in a 6G system, according to one embodiment of the present disclosure. The embodiment of FIG. 1 may be combined with various embodiments of the present disclosure.

In 6G, new network features may include the follows.
- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer
- Ubiquitous super 3D connectivity: Super 3D connection will be generated from 6G ubiquity to access networks and core network functions on drones and very low Earth orbit satellites.

Given the above new network characteristics of 6G, some common requirements may be as follows
- Small cell networks
- Ultra-dense heterogeneous network
- High-capacity backhaul
- Radar technology integrated with mobile technology: High-precision localization (or location-based services) through communication is one of the features of 6G wireless communication systems. Therefore, radar systems will be integrated with 6G networks.
- Softwarization and virtualization

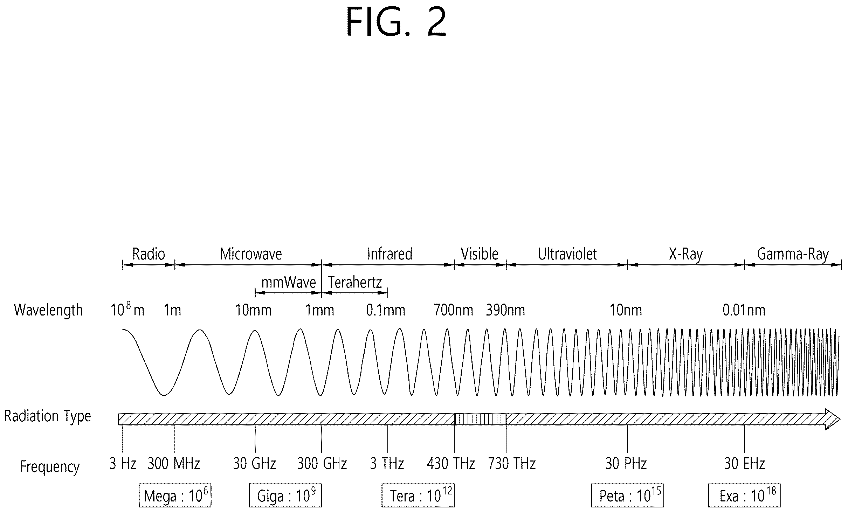

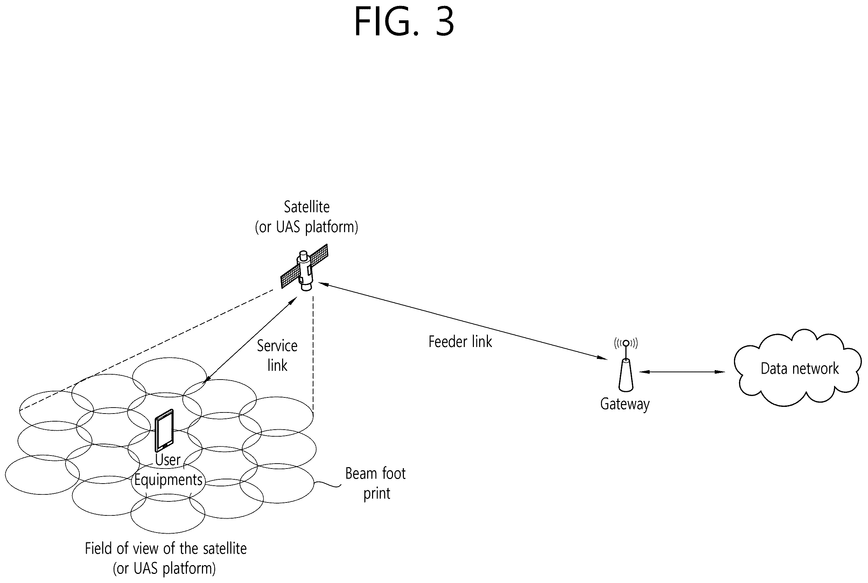

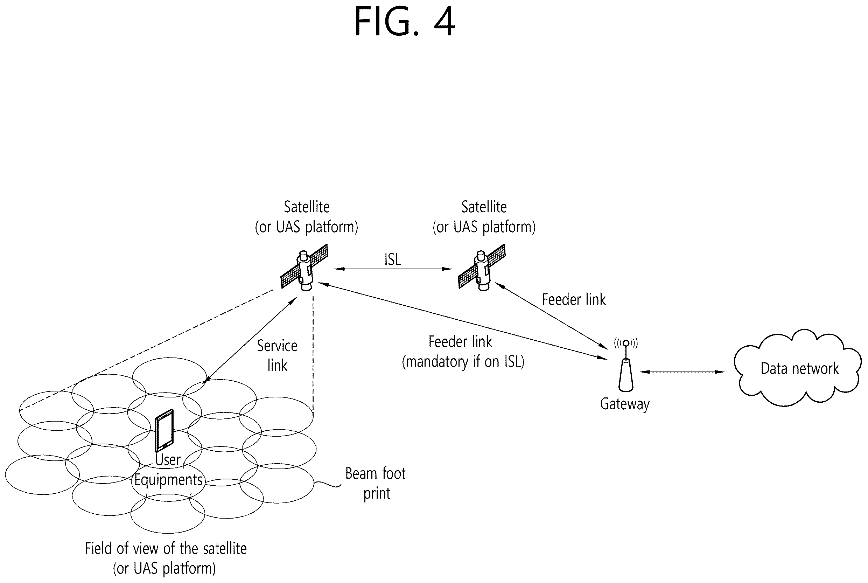

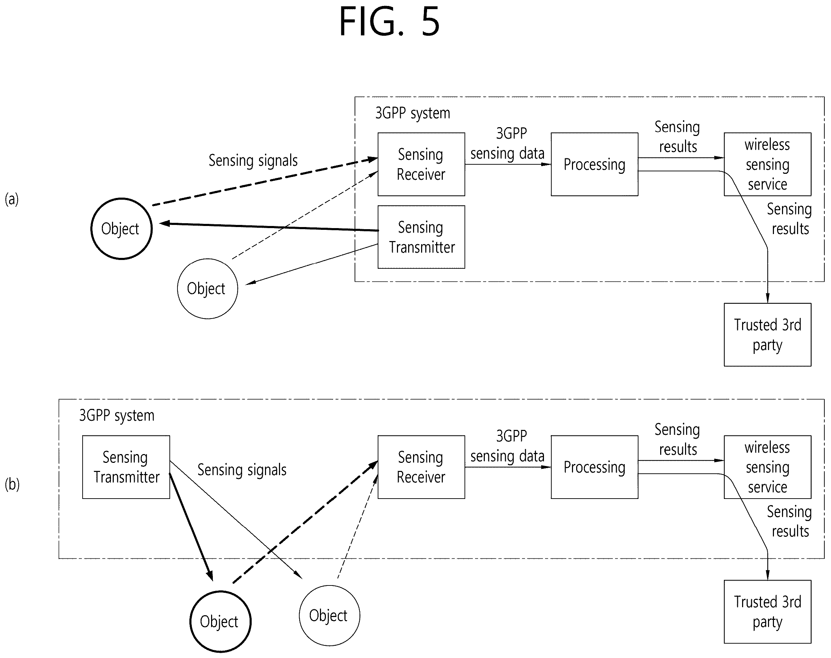

The following describes the core implementation technologies for 6G systems.
- Artificial intelligence: Introducing AI into telecommunications may simplify and improve real-time data transmission. AI may use numerous analytics to determine the way complex target tasks are performed, which means AI may increase efficiency and reduce processing delays. Time-consuming tasks such as handover, network selection, and resource scheduling may be performed instantly by using AI. AI may also play an important role in machine-to-machine, machine-to-human, and human-to-machine communication. AI may also be a rapid communication in brain computer interface (BCI). AI-based communication systems may be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Beamforming
- Optical wireless technology
- FSO Backhaul Network
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Advanced air mobility (AAM): AAM may mean a transportation means that is a higher-level concept of urban air mobility (UAM), which is an aerial transportation means available in urban areas, and may include movement between regional hubs as well as movement in urban areas.
- Autonomous driving, self-driving: Vehicle to everything (V2X), a key element in building an autonomous driving infrastructure, may be a technology that allows cars to communicate and share with various elements on the road to drive autonomously, such as vehicle to vehicle (V2V) and vehicle to infrastructure (V2I). To maximize the performance of autonomous driving and ensure high safety, fast transmission speeds and low latency technologies are essential. In addition, in the future, autonomous driving may need to go beyond delivering warnings and intervene actively in vehicle operations and take control of the vehicle in dangerous situations. To do so, the amount of information that needs to be transmitted and received may be enormous, and in 6G, faster transmission speeds and lower latency than 5G are expected to maximize autonomous driving.
- Non-terrestrial networks, NTN: An NTN may represent a network or network segment that uses radio frequency (RF) resources aboard a satellite (or unmanned aerial system (UAS) platform). FIG. 3 shows an example of an NTN typical scenario based on a transparent payload, according to one embodiment of the present disclosure. FIG. 4 shows an example of an NTN typical scenario based on a regenerative payload, according to one embodiment of the present disclosure. The embodiments of FIG. 3 or FIG. 4 may be combined with various embodiments of the present disclosure. Referring to FIG. 3, a satellite (or UAS platform) may establish a service link with a UE. The satellite (or UAS platform) may be connected to a gateway via a feeder link. The satellite may be connected to the data network via a gateway. A beam footprint may refer to an area where signals transmitted by a satellite can be received. Referring to FIG. 4, a satellite (or UAS platform) may establish a service link with a UE. A satellite (or UAS platform) connected to a UE may be connected to other satellites (or UAS platforms) via inter-satellite links (ISLs). The other satellites (or UAS platforms) may be connected to a gateway via feeder links. Based on the regenerative payload, the satellite may be connected to the data network via other satellites and a gateway. If an ISL does not exist between the satellite and another satellite, a feeder link between the satellite and a gateway may be required. FIG. 3 and FIG. 4 are just examples of NTN scenarios, and NTN may be implemented based on scenarios in many different ways. For example, a satellite (or UAS platform) may implement a transparent or regenerative (with on board processing) payload. For example, the satellite (or UAS platform) may generate multiple beams over a service area designated based on the field of view of the satellite (or UAS platform). For example, the field of view of the satellite (or UAS platform) may vary depending on the on-board antenna diagram and the minimum elevation angle. For example, a transparent payload may include radio frequency filtering, frequency conversion, and amplification. Thus, the waveform signal repeated by the payload may not be changed. For example, a regenerative payload may include radio frequency filtering, frequency conversion and amplification, demodulation/decoding, switching and/or routing, and coding/modulation. For example, a regenerative payload may be substantially equivalent to carrying all or part of a base station's functionality on board a satellite (or UAS platform).
- Integrated sensing and communication, ISAC: Wireless sensing is a technology that uses radio frequencies to determine an object's instantaneous linear velocity, angle, distance (range), etc. to obtain information about an environment and/or the properties of an object in the environment. Since radio frequency sensing function does not require connecting to an object through a device in the network, it may provide a service for object positioning without a device. The ability to obtain range, velocity, and angle information from radio frequency signals can provide a wide range of new capabilities, such as detection of various objects, object recognition (e.g., vehicles, humans, animals, UAVs), and high-precision positioning, tracking, and activity recognition. Wireless sensing services may provide information to a variety of industries (e.g., unmanned aerial vehicles, smart homes, V2X, factories, railroads, public safety, etc.) enabling applications that provide, for example, intruder detection, assisted vehicle steering and navigation, trajectory tracking, conflict avoidance, traffic management, health and transportation management, and more. In some cases, wireless sensing may utilize non-3GPP type sensors (e.g., radar, cameras) to further support 3GPP-based sensing. For example, the operation of a wireless sensing service, i.e., the sensing operation, may rely on handling the transmission, reflection, and scattering of wireless sensing signals. Thus, wireless sensing may provide an opportunity to enhance existing communication systems from telecommunication networks to wireless communication and sensing networks. FIG. 5 shows an example of a sensing operation, according to one embodiment of the present disclosure. The embodiment of FIG. 5 may be combined with various embodiments of the present disclosure. Specifically, (a) of FIG. 5 shows an example of sensing using a sensing receiver and a sensing transmitter that are co-located (e.g., monostatic sensing), and (b) of FIG. 5 shows an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

A physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

In the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot (N^{slot}_{symb}), the number of slots per frame (N^{frame,u}ₛₗₒₜ), and the number of slots per subframe (N^{subframe,u}ₛₗₒₜ), according to an SCS configuration (u), when Normal CP or Extended CP is used.

**[Table 2]**

| CP Type | SCS (15*2^{u}) | N^{slot}_{symb} | N^{frame,u}ₛₗₒₜ | N^{subframe,u}ₛₗₒₜ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| Extended CP | 60kHz (u=2) | 12 | 40 | 4 |

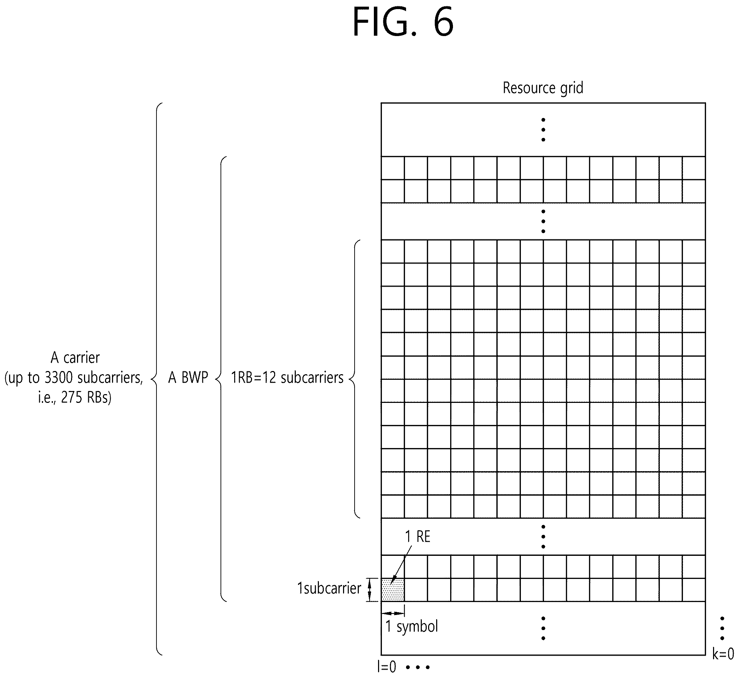

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain.

A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier

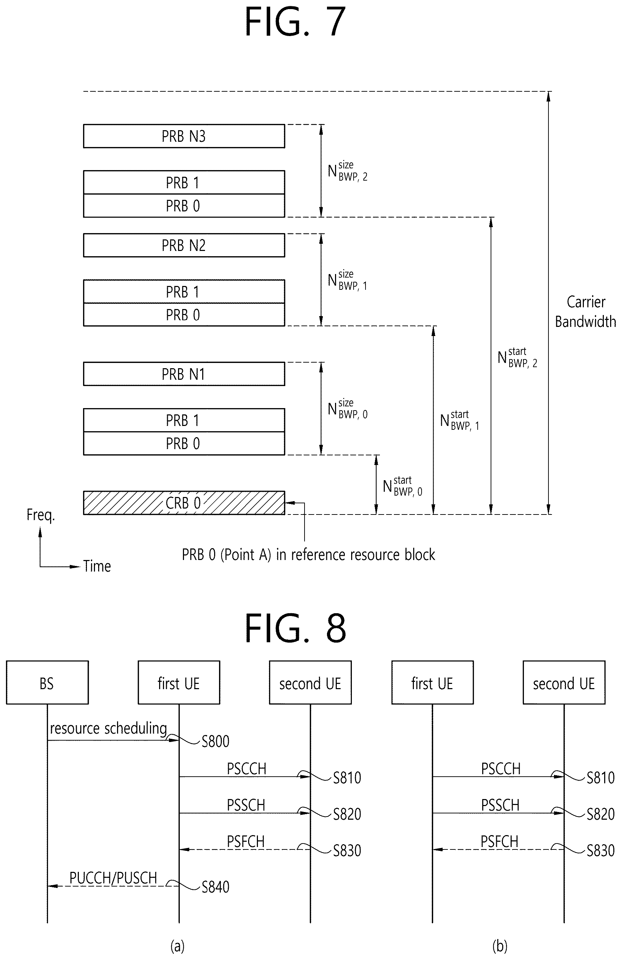

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In this specification, a PSCCH may be replaced with a control channel, a physical control channel, a control channel related to sidelink, or a physical control channel related to sidelink. In this specification, a PSSCH may be replaced with a shared channel, a physical shared channel, a shared channel related to sidelink, or a physical shared channel related to sidelink.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1 st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be DCI for scheduling of SL.

Referring to (b) of FIG. 8, in resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Meanwhile, in the conventional unlicensed spectrum (NR-U), a communication method between a UE and a base station is supported in an unlicensed band (or, shared spectrum). In addition, a mechanism for supporting communication in an unlicensed band between sidelink UEs is planned to be supported in Rel-18.

In the present disclosure, a channel may refer to a set of frequency domain resources in which Listen-Before-Talk (LBT) is performed. In NR-U, the channel may refer to an LBT bandwidth with 20 MHz and may have the same meaning as a resource block (e.g., RB) set. For example, the resource block (e.g., RB) set may be defined in section 7 of 3GPP TS 38.214 V17.0.0.

In the present disclosure, channel occupancy (CO) may refer to time/frequency domain resources obtained by the base station or the UE after LBT success.

In the present disclosure, channel occupancy time (COT) may refer to time domain resources obtained by the base station or the UE after LBT success. It may be shared between the base station (or the UE) and the UE (or the base station) that obtained the CO, and this may be referred to as COT sharing. Depending on the initiating device, this may be referred to as gNB-initiated COT or UE-initiated COT.

Hereinafter, a wireless communication system supporting an unlicensed band/shared spectrum will be described.

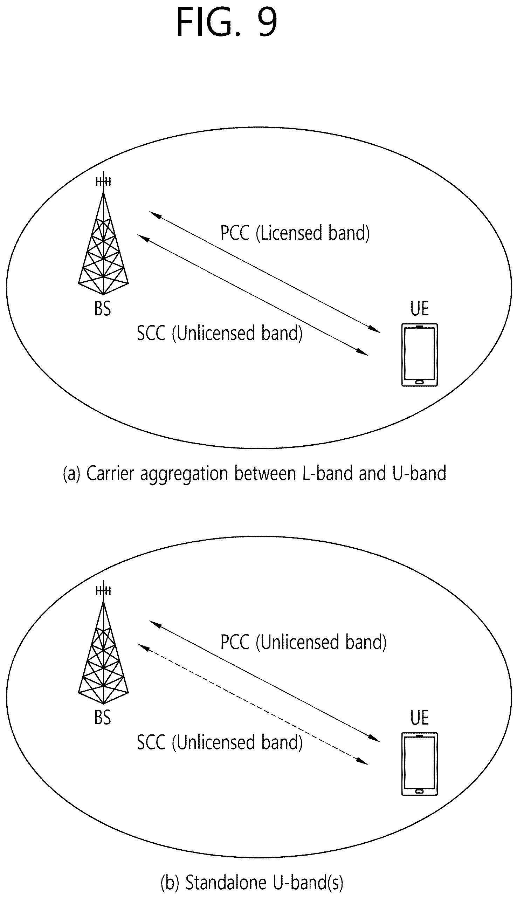

FIG. 9 shows an example of a wireless communication system supporting an unlicensed band, based on an embodiment of the present disclosure. For example, FIG. 9 may include an unlicensed spectrum (NR-U) wireless communication system. The embodiment of FIG. 9 may be combined with various embodiments of the present disclosure.

In the following description, a cell operating in a licensed band (hereinafter, L-band) may be defined as an L-cell, and a carrier of the L-cell may be defined as a (DL/UL/SL) LCC. In addition, a cell operating in an unlicensed band (hereinafter, U-band) may be defined as a U-cell, and a carrier of the U-cell may be defined as a (DL/UL/SL) UCC. The carrier/carrier-frequency of a cell may refer to the operating frequency (e.g., center frequency) of the cell. A cell/carrier (e.g., CC) is commonly called a cell.

When the base station and the UE transmit and receive signals on carrier-aggregated LCC and UCC as shown in (a) of FIG. 9, the LCC and the UCC may be configured as a primary CC (PCC) and a secondary CC (SCC), respectively. The base station and the UE may transmit and receive signals on one UCC or on a plurality of carrier-aggregated UCCs as shown in (b) of FIG. 9. In other words, the base station and the UE may transmit and receive signals only on UCC(s) without using any LCC. For a standalone operation, physical channel(e.g., PRACH, PUCCH, PUSCH) transmission, and SRS transmission, etc. may be supported on a UCell.

In the embodiment of FIG. 9, the base station may be replaced with the UE. In this case, for example, physical channel(e.g., PRACH, PUCCH, PUSCH) transmission, and SRS transmission, etc. may be supported on a UCell.

Unless otherwise mentioned, the following definitions may be applied to terms used herein. For example, unlicensed spectrum and shared spectrum may be mutually interchangeable/substitutable in this disclosure. For example, channel sensing (on shared spectrum) in the present disclosure may refer to channel sensing related to a channel access procedure (e.g., CAP). The CAP may include a step of (channel) sensing for a resource (or, channel) on which a transmission is to be performed.
- Channel: a carrier or a part of a carrier composed of a contiguous set of resource blocks (e.g., RBs) in which a channel access procedure is performed in a shared spectrum.
- Channel access procedure (e.g., CAP): a procedure of assessing channel availability based on sensing before signal transmission in order to determine whether other communication node(s) are using a channel. A basic sensing unit is a sensing slot with a duration of Tₛₗ = 9 us. The base station or the UE senses a channel during a sensing slot duration. If power detected for at least 4 us within the sensing slot duration is less than an energy detection threshold Xₜₕᵣₑₛₕ, the sensing slot duration Tₛₗ is considered to be idle. Otherwise, the sensing slot duration Tₛₗ = 9 us is considered to be busy. CAP may also be referred to as listen before talk (LBT). For example, a channel access procedure (e.g., CAP) may include an LBT, and channel sensing may be performed to monitor the power of that channel during a specific time interval (channel sensing interval) for the CAP.
- Channel occupancy: transmission(s) on channel(s) by the base station/UE after a channel access procedure.
- Channel occupancy time (COT): a total time during which the base station/UE and any base station/UE(s) sharing channel occupancy can perform transmission(s) on a channel after the base station/UE perform a channel access procedure. In the case of determining COT, if a transmission gap is less than or equal to 25 us, the gap duration may be counted in the COT. The COT may be shared for transmission between the base station and corresponding UE(s).
- base station-to-UE (e.g., DL) transmission burst: a set of transmissions without any gap greater than 16 us from the base station. Transmissions from the base station, which are separated by a gap exceeding 16 us are considered as separate base station-to-UE (e.g., DL) transmission bursts. The base station may perform transmission(s) after a gap without sensing channel availability within a base station-to-UE (e.g., DL) transmission burst.
- UE-to-base station (e.g., UL) or inter-UE (e.g., SL) transmission burst: a set of transmissions without any gap greater than 16 us from the UE. Transmissions from the UE, which are separated by a gap exceeding 16 us are considered as separate UE-to-base station (e.g., UL) or inter-UE (e.g., SL) transmission bursts. The UE may perform transmission(s) after a gap without sensing channel availability within a UE-to-base station (e.g., UL) or inter-UE (e.g., SL) transmission burst.
- Discovery burst: a base station-to-UE (e.g., DL) transmission burst including a set of signal(s) and/or channel(s) confined within a window and associated with a duty cycle. In the LTE-based system, the discovery burst may be transmission(s) initiated by the base station, which includes a synchronization signal(e.g., a PSS, an SSS), and a reference signal(e.g., cell-specific RS (CRS)) and further includes non-zero power channel state information reference signal (e.g., CSI-RS). In the NR-based system, the discover burst may be transmission(s) initiated by the base station, which includes at least a synchronization signal/physical broadcast channel (e.g., SS/PBCH) block and further includes control resource set (e.g., CORESET) for a physical base station-to-UE control channel (e.g., PDCCH) scheduling a physical base station-to-UE shared channel (e.g., PDSCH) carrying SIB1, the physical base station-to-UE shared channel (e.g., PDSCH) carrying SIB1, and/or non-zero power channel state information reference signal (e.g., CSI-RS).

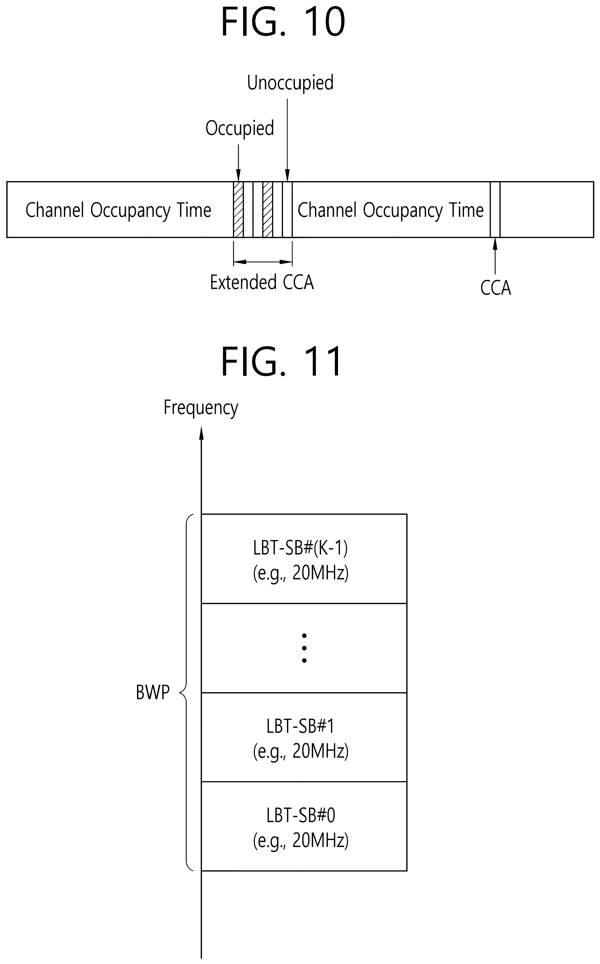

FIG. 10 shows a method of occupying resources in an unlicensed band, based on an embodiment of the present disclosure. The embodiment of FIG. 10 may be combined with various embodiments of the present disclosure.

Referring to FIG. 10, a communication node (e.g., base station, UE) within an unlicensed band should determine whether other communication node(s) is using a channel before signal transmission. To this end, the communication node within the unlicensed band may perform a channel access procedure (e.g., CAP) to access channel(s) on which transmission(s) is performed. The channel access procedure may be performed based on sensing. For example, the communication node may perform carrier sensing (CS) before transmitting signals so as to check whether other communication node(s) perform signal transmission. When the other communication node(s) perform no signal transmission, it is the that clear channel assessment (CCA) is confirmed. If a CCA threshold (e.g., X_{Thresh}) is predefined or configured by a higher layer (e.g., RRC), the communication node may determine that the channel is busy if the detected channel energy is higher than the CCA threshold. Otherwise, the communication node may determine that the channel is idle. If it is determined that the channel is idle, the communication node may start the signal transmission in the unlicensed band. The CAP may be replaced with the LBT. For example, a channel access procedure (e.g., CAP) may include an LBT, and channel sensing may be performed to monitor the power of that channel during a specific time interval (channel sensing interval) for the CAP.

Table 3 shows an example of the channel access procedure (e.g., CAP) supported in NR-U.

**[Table 3]**

| | Type | Explanation |
|---|---|---|
| base station-to-UE | Type 1 CAP | CAP with random back-off |
| | | - time duration spanned by the sensing slots that are sensed to be idle before a downlink transmission(s) is random |
| | Type 2 CAP - Type 2A, 2B, 2C | CAP without random back-off |
| | | - time duration spanned by sensing slots that are sensed to be idle before a downlink transmission(s) is deterministic |
| UE-to-base station or inter-UE | Type 1 CAP | CAP with random back-off |
| | | - time duration spanned by the sensing slots that are sensed to be idle before an uplink or sidelink transmission(s) is random |
| | Type 2 CAP - Type 2A, 2B, 2C | CAP without random back-off |
| | | - time duration spanned by sensing slots that are sensed to be idle before an uplink or sidelink transmission(s) is deterministic |

Referring to Table 3, the LBT type or CAP for base station-to-UE (e.g., DL)/UE-to-base station (e.g., UL)/inter-UE (e.g., SL) transmission may be defined. However, Table 3 is only an example, and a new type or CAP may be defined in a similar manner. For example, the type 1 (also referred to as Cat-4 LBT) may be a random back-off based channel access procedure. For example, in the case of Cat-4, the contention window may change. For example, the type 2 can be performed in case of COT sharing within COT acquired by the base station (gNB) or the UE.

Hereinafter, LBT-SubBand (SB) (or RB set) will be described.

In a wireless communication system supporting an unlicensed band, one cell (or carrier (e.g., CC)) or bandwidth part (e.g., BWP) configured for the UE may have a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/bandwidth part (e.g., BWP). A set of resource blocks (e.g., RBs) included in an LBT-SB may be configured by higher-layer (e.g., RRC) signaling. Accordingly, one or more LBT-SBs may be included in one cell/bandwidth part (e.g., BWP) based on (i) the BW of the cell/bandwidth part (e.g., BWP) and (ii) RB set allocation information.

FIG. 11 shows a case in which a plurality of LBT-SBs are included in an unlicensed band, based on an embodiment of the present disclosure. The embodiment of FIG. 11 may be combined with various embodiments of the present disclosure.

Referring to FIG. 11, a plurality of LBT-SBs may be included in the bandwidth part (e.g., BWP) of a cell (or carrier). An LBT-SB may have, for example, a 20-MHz band. The LBT-SB may include a plurality of contiguous (physical) resource blocks

(e.g., (P)RBs) in the frequency domain, and thus may be referred to as a (physical) resource block (e.g., (P)RB) set. While not shown, a guard band (GB) may be interposed between LBT-SBs. Accordingly, the bandwidth part (e.g., BWP) may be configured in the form of {LBT-SB #0 (RB set #0)+GB #0+LBT-SB #1 (RB set #1+GB #1) + ... +LBT-SB #(K-1) (RB set (#K-1))}. For convenience, LBT-SB/RB indexes may be configured/defined in an increasing order from the lowest frequency to the highest frequency.

Hereinafter, a channel access priority class (CAPC) will be described.

The CAPCs of MAC control elements (e.g., CEs) and radio bearers may be fixed or configured to operate in FR1:
- Fixed to lowest priority for padding buffer status report (BSR) and recommended bit rate MAC control element (e.g., CE);
- Fixed to highest priority for SRB0, SRB1, SRB3 and other MAC control elements (e.g., CEs);
- Configured by the base station for SRB2 and DRB.

When selecting a CAPC of a DRB, the base station considers fairness between other traffic types and transmissions while considering 5QI of all QoS flows multiplexed to the corresponding DRB. Table 4 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

**[Table 4]**

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Hereinafter, a method of transmitting a downlink signal through an unlicensed band will be described. For example, a method of transmitting a downlink signal through an unlicensed band may be applied to a method of transmitting a sidelink signal through an unlicensed band.

The base station may perform one of the following channel access procedures (e.g., CAP) for downlink signal transmission in an unlicensed band.

### (1) Type 1 downlink (base station-to-UE (e.g., DL)) CAP Method

In the type 1 base station-to-UE (e.g., DL) CAP, the length of a time duration spanned by sensing slots sensed to be idle before transmission(s) may be random. The type 1 base station-to-UE (e.g., DL) CAP may be applied to the following transmissions:
- Transmission(s) initiated by the base station including (i) a unicast physical base station-to-UE shared channel (e.g., PDSCH) with user plane data or (ii) the unicast physical base station-to-UE shared channel (e.g., PDSCH) with user plane data and a unicast physical base station-to-UE control channel (e.g., PDCCH) scheduling user plane data, or
- Transmission(s) initiated by the base station including (i) a discovery burst only or (ii) a discovery burst multiplexed with non-unicast information.

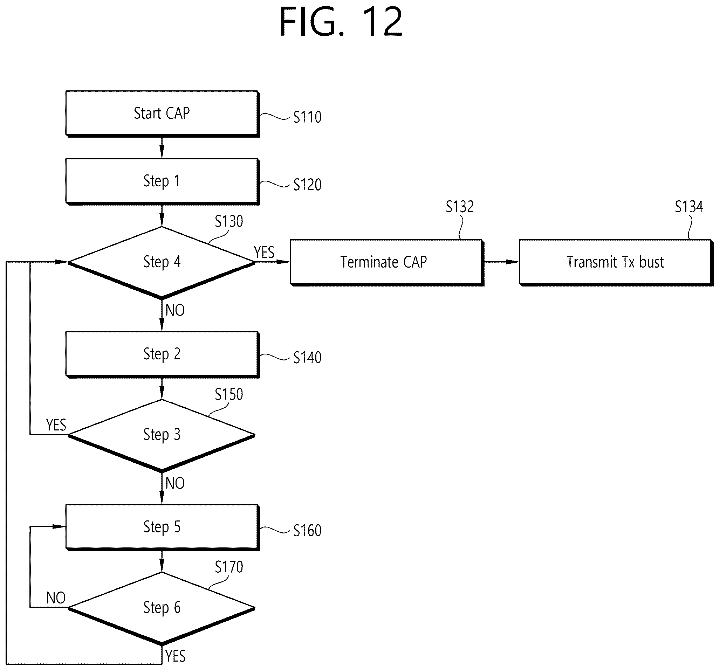

FIG. 12 shows CAP operations performed by a base station to transmit a downlink signal through an unlicensed band, based on an embodiment of the present disclosure. The embodiment of FIG. 12 may be combined with various embodiments of the present disclosure.

Referring to FIG. 12, the base station may sense whether a channel is idle for sensing slot durations of a defer duration T_{d}. Then, if a counter N is zero, the base station may perform transmission (S134). In this case, the base station may adjust the counter N by sensing the channel for additional sensing slot duration(s) according to the following steps:
Step 1) (S120) The base station sets N to Nᵢₙᵢₜ (N= Nᵢₙᵢₜ), where Nᵢₙᵢₜ is a random number uniformly distributed between 0 and CWₚ. Then, step 4 proceeds.
Step 2) (S140) If N>0 and the base station determines to decrease the counter, the base station sets N to N-1 (N=N-1).
Step 3) (S150) The base station senses the channel for the additional sensing slot duration. If the additional sensing slot duration is idle (Y), step 4 proceeds. Otherwise (N), step 5 proceeds.
Step 4) (S130) If N=0 (Y), the base station terminates the CAP (S132). Otherwise (N), step 2 proceeds.
Step 5) (S160) The base station senses the channel until either a busy sensing slot is detected within an additional defer duration T_{d} or all the slots of the additional defer duration T_{d} are detected to be idle.
Step 6) (S170) If the channel is sensed to be idle for all the slot durations of the additional defer duration T_{d} (Y), step 4 proceeds. Otherwise (N), step 5 proceeds.
Table 5 shows that mₚ, a minimum contention window (CW), a maximum CW, a maximum channel occupancy time (MCOT), and an allowed CW size, which are applied to the CAP, vary depending on channel access priority classes.

[Table 5]

| Channel Access Priority Class (p) | mp | CW_{min,p} | CW_{max,p} | T_{mcot,p} | allowed CWₚ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 5, a contention window size (CWS), a maximum COT value, etc. for each CAPC may be defined. For example, T_{d} may be equal to T_{f} + mₚ * Tsl (T_{d} = T_{f} + mₚ * Tₛₗ).

The defer duration T_{d} is configured in the following order: duration T_{f} (16 us) + mₚ consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}, CWₚ may be configured by CWₚ = CW_{min,p} and updated before step 1 based on HARQ-ACK feedback (e.g., the ratio of ACK or NACK) for a previous base station-to-UE (e.g., DL) burst (e.g., PDSCH) (CW size update). For example, CWₚ may be initialized to CW_{min,p} based on the HARQ-ACK feedback for the previous base station-to-UE (e.g., DL) burst. Alternatively, CWₚ may be increased to the next higher allowed value or maintained as it is.

### (2) Type 2 downlink (base station-to-UE (e.g., DL)) CAP Method

In the type 2 base station-to-UE (e.g., DL) CAP, the length of a time duration spanned by sensing slots sensed to be idle before transmission(s) may be determined. The type 2 base station-to-UE (e.g., DL) CAP is classified into type 2A/2B/2C base station-to-UE (e.g., DL) CAPs.

The type 2A base station-to-UE (e.g., DL) CAP may be applied to the following transmissions. In the type 2A base station-to-UE (e.g., DL) CAP, the base station may perform transmission immediately after the channel is sensed to be idle at least for a sensing duration T_{short_dl} = 25 us. Herein, T_{short_dl} includes the duration Tr (=16 us) and one sensing slot duration immediately after the duration T_{f}, where the duration Tr includes a sensing slot at the beginning thereof.
- Transmission(s) initiated by the base station including (i) a discovery burst only or (ii) a discovery burst multiplexed with non-unicast information, or
- Transmission(s) by the base station after a gap of 25 us from transmission(s) by the UE within a shared channel occupancy.

The type 2B base station-to-UE (e.g., DL) CAP is applicable to transmission(s) performed by the base station after a gap of 16 us from transmission(s) by the UE within a shared channel occupancy time. In the type 2B base station-to-UE (e.g., DL) CAP, the base station may perform transmission immediately after the channel is sensed to be idle for T_{f} = 16 us. T_{f} includes a sensing slot within 9 us from the end of the duration. The type 2C base station-to-UE (e.g., DL) CAP is applicable to transmission(s) performed by the base station after a maximum of 16 us from transmission(s) by the UE within the shared channel occupancy time. In the type 2C base station-to-UE (e.g., DL) CAP, the base station does not perform channel sensing before performing transmission.

Hereinafter, a method of transmitting an uplink signal through an unlicensed band will be described. For example, a method of transmitting an uplink signal through an unlicensed band may be applied to a method of transmitting a sidelink signal through an unlicensed band.

The UE may perform type 1 or type 2 CAP for UE-to-base station (e.g., UL) signal transmission in an unlicensed band. In general, the UE may perform the CAP (e.g., type 1 or type 2) configured by the base station for UE-to-base station (e.g., UL) signal transmission. For example, a UE-to-base station (e.g., UL) grant scheduling PUSCH transmission (e.g., DCI formats 0_0 and 0_1) may include CAP type indication information for the UE.

### (1) Type 1 uplink (UE-to-base station (e.g., UL)) CAP Method

In the type 1 UE-to-base station (e.g., UL) CAP, the length of a time duration spanned by sensing slots sensed to be idle before transmission(s) is random. The type 1 UE-to-base station (e.g., UL) CAP may be applied to the following transmissions.
- PUSCH/SRS transmission(s) scheduled and/or configured by the base station
- PUCCH transmission(s) scheduled and/or configured by the base station
- Transmission(s) related to a random access procedure (RAP)

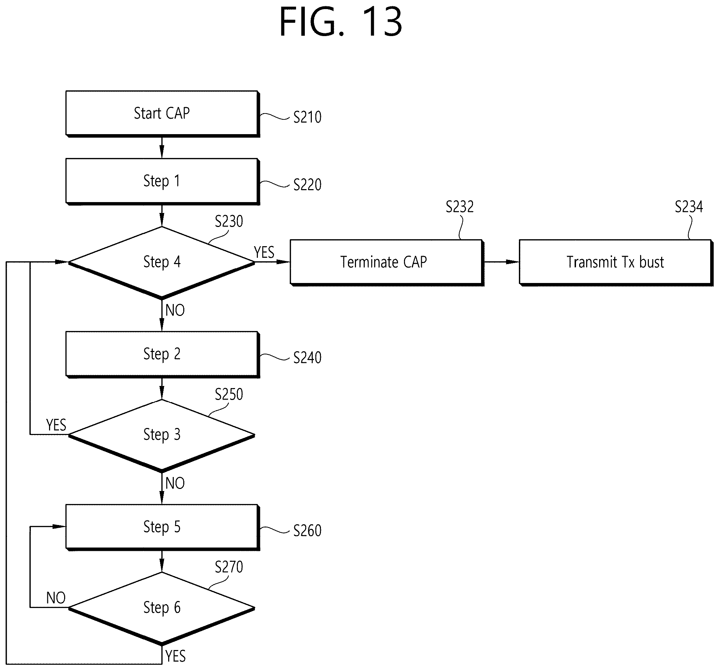

FIG. 13 shows type 1 CAP operations performed by a UE to transmit an uplink signal, based on an embodiment of the present disclosure. The embodiment of FIG. 13 may be combined with various embodiments of the present disclosure.

Referring to FIG. 13, the UE may sense whether a channel is idle for sensing slot durations of a defer duration T_{d}. Then, if a counter N is zero, the UE may perform transmission (S234). In this case, the UE may adjust the counter N by sensing the channel for additional sensing slot duration(s) according to the following steps:
Step 1) (S220) The UE sets N to Nᵢₙᵢₜ (N = Nᵢₙᵢₜ), where Nᵢₙᵢₜ is a random number uniformly distributed between 0 and CWₚ. Then, step 4 proceeds.
Step 2) (S240) If N>0 and the UE determines to decrease the counter, the UE sets N to N-1 (N = N-1).
Step 3) (S250) The UE senses the channel for the additional sensing slot duration. If the additional sensing slot duration is idle (Y), step 4 proceeds. Otherwise (N), step 5 proceeds.
Step 4) (S230) If N=0 (Y), the UE terminates the CAP (S232). Otherwise (N), step 2 proceeds.
Step 5) (S260) The UE senses the channel until either a busy sensing slot is detected within an additional defer duration T_{d} or all the slots of the additional defer duration T_{d} are detected to be idle.
Step 6) (S270) If the channel is sensed to be idle for all the slot durations of the additional defer duration T_{d} (Y), step 4 proceeds. Otherwise (N), step 5 proceeds.

Table 6 shows that mₚ, a minimum CW, a maximum CW, a maximum channel occupancy time (MCOT), and an allowed CW size, which are applied to the CAP, vary depending on channel access priority classes.

**[Table 6]**

| Channel Access Priority Class (p) | mₚ | CW_{min,p} | CW_{max,p} | Tulmcot,p | allowed CWₚ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 6, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

The defer duration T_{d} is configured in the following order: duration T_{f} (16 us) + mₚ consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}, CWₚ may be configured by CWₚ = CW_{min,p} and updated before step 1 based on an explicit/implicit reception response for a previous UE-to-base station (e.g., UL) burst (e.g., PUSCH) (CW size update). For example, CWₚ may be initialized to CW_{min,p} based on the explicit/implicit reception response for the previous UE-to-base station (e.g., UL) burst. Alternatively, CWₚ may be increased to the next higher allowed value or maintained as it is.

### (2) Type 2 uplink (UE-to-base station (e.g., UL)) CAP Method

In the type 2 UE-to-base station (e.g., UL) CAP, the length of a time duration spanned by sensing slots sensed to be idle before transmission(s) may be determined. The type 2 UE-to-base station (e.g., UL) CAP is classified into type 2A/2B/2C UE-to-base station (e.g., UL) CAPs. In the type 2A UE-to-base station (e.g., UL) CAP, the UE may perform transmission immediately after the channel is sensed to be idle at least for a sensing duration T_{short_dl} = 25 us. Herein, T_{short_dl} includes the duration T_{f} (=16 us) and one sensing slot duration immediately after the duration Tr. In the type 2A UE-to-base station (e.g., UL) CAP, T_{f} includes a sensing slot at the beginning thereof. In the type 2B UE-to-base station (e.g., UL) CAP, the UE may perform transmission immediately after the channel is sensed to be idle for the sensing duration T_{f} = 16 us. In the type 2B UE-to-base station (e.g., UL) CAP, T_{f} includes a sensing slot within 9 us from the end of the duration. In the type 2C UE-to-base station (e.g., UL) CAP, the UE does not perform channel sensing before performing transmission.

For example, according to the type 1 LBT-based NR-U operation, the UE having uplink data to be transmitted may select a CAPC mapped to 5QI of data, and the UE may perform the NR-U operation by applying parameters of the corresponding CACP (e.g., minimum contention window size, maximum contention window size, mₚ, etc.). For example, the UE may select a backoff counter (BC) after selecting a random value between the minimum CW and the maximum CW mapped to the CAPC. In this case, for example, the BC may be a positive integer less than or equal to the random value. The UE sensing a channel decreases the BC by 1 if the channel is idle. If the BC becomes zero and the UE detects that the channel is idle for the time T_{d} (T_{d} = T_{f} + mₚ * Tₛₗ), the UE may attempt to transmit data by occupying the channel. For example, Tₛₗ (= 9 usec) is a basic sensing unit or sensing slots, and may include a measurement duration for at least 4 usec. For example, the front 9 usec of T_{f} (= 16 usec) may be configured to be Tₛₗ.

For example, according to the type 2 LBT-based NR-U operation, the UE may transmit data by performing the type 2 LBT (e.g., type 2A LBT, type 2B LBT, or type 2C LBT) within COT.

For example, the type 2A (also referred to as Cat-2 LBT (one shot LBT) or one-shot LBT) may be 25 usec one-shot LBT. In this case, transmission may start immediately after idle sensing for at least a 25 usec gap. The type 2A may be used to initiate transmission of SSB and non-unicast base station-to-UE (e.g., DL) information. That is, the UE may sense a channel for 25 usec within COT, and if the channel is idle, the UE may attempt to transmit data by occupying the channel.

For example, the type 2B may be 16 usec one-shot LBT. In this case, transmission may start immediately after idle sensing for a 16 usec gap. That is, the UE may sense a channel for 16 usec within COT, and if the channel is idle, the UE may attempt to transmit data by occupying the channel.

For example, in the case of the type 2C (also referred to as Cat-1 LBT or No LBT), LBT may not be performed. In this case, transmission may start immediately after a gap of up to 16 usec and a channel may not be sensed before the transmission. The duration of the transmission may be up to 584 usec. The UE may attempt transmission after 16 usec without sensing, and the UE may perform transmission for up to 584 usec.

In a sidelink unlicensed band, the UE may perform a channel access operation based on Listen Before Talk (LBT). Before the UE accesses a channel in an unlicensed band, the UE should check whether the channel to be accessed is idle (e.g., a state in which UEs do not occupy the channel, a state in which UEs can access the corresponding channel and transmit data) or busy (e.g., a state in which the channel is occupied and data transmission/reception is performed on the corresponding channel, and the UE attempting to access the channel cannot transmit data while the channel is busy). That is, the operation in which the UE checks whether the channel is idle or busy may be referred to as Clear Channel Assessment (CCA), and the UE may check whether the channel is idle or busy for the CCA duration.

Meanwhile, in a future system, a UE may perform a sidelink transmission and/or reception operation in an unlicensed band. For operations in an unlicensed band, depending on band-specific regulations or requirements, a UE's transmission may be preceded by a channel sensing operation (e.g., energy detection/measurement) for the channel to be used, a UE may perform a transmission in the unlicensed band only if, as a result of the channel sensing, the channel or RB set to be used is determined to be IDLE (e.g., if the measured energy is less than or equal to or greater than a certain threshold value), and, if, according to a result of the channel sensing, the channel or RB set to be used is determined to be BUSY (e.g., if the measured energy is greater than or equal to or greater than a certain threshold value), the UE may cancel all or part of the transmission in the unlicensed band.

Meanwhile, in operation in an unlicensed band, a UE may omit or simplify the channel sensing operation (i.e., make the channel sensing interval relatively small) within a certain time interval after a transmission for a certain time period, or conversely, after a certain time interval after the transmission, the UE may decide whether to transmit or not after performing the usual channel sensing operation.

On the other hand, in a transmission in an unlicensed band, depending on regulations or requirements, the size and/or power spectral density (PSD) of the time interval and/or frequency occupied region of the signal/channel transmitted by the UE may be greater than or equal to a certain level, respectively.

On the other hand, in unlicensed bands, in order to simplify channel sensing, it may be informed through channel occupancy time (COT) interval information that the channel obtained through initial general channel sensing is occupied for a certain period of time, and the length of the COT duration may be configured to have different maximum values depending on the priority of the service or data packet or the channel access priority class (CAPC).

Meanwhile, a base station may share a COT duration secured through channel sensing in the form of base-station-to-UE control information (e.g., DCI). A UE may perform, within the COT duration, a specific (indicated) channel sensing type and/or cyclic prefix (e.g., CP) extension (i.e., CPE) according to the base-station-to-UE control information (e.g., DCI) received from the base station. Meanwhile, the UE may share a COT duration secured through its own channel sensing with a base station that is a reception target of the UE's UE-to-base-station (e.g., UL) transmission, and related information may be provided through UE-to-base-station control information (e.g., CG-UCI) via UE-to-base-station communication (e.g., UL communication). In the above situation, the base station may perform simplified channel sensing within the COT duration shared from the UE.

Meanwhile, in the case of inter-UE (e.g., SL) communication, there may be a situation, such as mode 1 random access (e.g., RA) operation, in which a UE is instructed by a base station regarding resources to be used for inter-UE (e.g., SL) transmission through base-station-to-UE control information (e.g., DCI) or radio resource control (e.g., RRC) signaling, and there may also be an operation, such as mode 2 random access (e.g., RA) operation, in which inter-UE (e.g., SL) transmission and reception are performed through sensing operations between UEs without assistance from a base station.

Meanwhile, channel access type 1 may be used regardless of channel occupancy time (COT) configuration.

Meanwhile, a simplified channel access type 2 could be used before transmission within a channel occupancy time (COT) duration.

According to an embodiment of the present disclosure, a type 2A inter-UE (e.g., SL) channel access may follow the same scheme as a type 2A base station-to-UE communication (e.g., DL) and/or UE-to-base station communication (e.g., UL) channel access, and a sensing duration of T_short_sl=25 us and a T_f=16 us duration immediately following the sensing duration are configured as a single sensing slot, and T_f may include a sensing slot at its beginning portion. Basic idle determination may also use the scheme of base station-to-UE communication (e.g., DL) or UE-to-base station communication (e.g., UL).

According to an embodiment of the present disclosure, a type 2B inter-UE (e.g., SL) channel access may follow the same scheme as a type 2B base station-to-UE communication (e.g., DL) and/or UE-to-base station communication (e.g., UL) channel access, and a sensing duration of T_f=16 us may include a sensing slot in a last 9-us portion of T_f. Basic idle determination may also use the scheme of base station-to-UE communication (e.g., DL) or UE-to-base station communication (e.g., UL).

According to an embodiment of the present disclosure, a type 2C inter-UE (e.g., SL) channel access may follow the same scheme as a type 2C base station-to-UE communication (e.g., DL) and/or UE-to-base station communication (e.g., UL) channel access, and channel sensing may not be performed. Instead, a time duration of an inter-UE (e.g., SL) transmission may be up to 584 us.

According to an embodiment of the present disclosure, a type 1 inter-UE (e.g., SL) channel access may follow the same scheme as a type 1 base station-to-UE communication (e.g., DL) and/or UE-to-base station communication (e.g., UL) channel access, and i) an integer value N is randomly derived based on a contention window size corresponding to a priority class, ii) when a channel sensing result for a defer duration of T_d corresponding to the priority class is idle, a counter value may be decreased to N-1 in units of T_sl when idle, and iii) when the value of the counter becomes 0, the UE may occupy a resource block (e.g., RB) set or a channel that is subject to channel sensing.

However, when a part of the channel sensing result for the T_sl duration is determined to be busy, the counter value may be maintained as is, and channel sensing may continue until a channel sensing result in units of a defer duration of T_d becomes idle again. In the above, a defer duration of T_d may be configured such that m_p T_sl durations are consecutively configured after T_f=16 us, where m_p is a value determined according to a priority class p, and T_sl=9 us may be a time duration in which channel sensing is performed.

According to an embodiment of the present disclosure, when a UE has occupied the channel through a type 1 inter-UE (e.g., SL) channel access and the UE is not ready for an inter-UE (e.g., SL) transmission to be transmitted, the UE may configure a defer duration of T_d and a sensing duration of T_sl immediately before an inter-UE (e.g., SL) transmission that is ready for transmission, and when both are idle, the UE may perform the inter-UE (e.g., SL) transmission immediately. Here, when either one of the durations is busy, the UE may perform the type 1 inter-UE (e.g., SL) channel access again.

For example, when an inter-UE (e.g., SL) transmission is difficult at a time point at which channel sensing ends (for example, when the end time point of the channel sensing is after a start time point of the inter-UE (e.g., SL) transmission), the UE may reselect the inter-UE (e.g., SL) transmission resource.

Meanwhile, for two transmissions that start at a same time, a collision may occur when the transmissions do not recognize each other and determine a channel sensing result as idle for each other.

Meanwhile, when a start time point is randomly adjusted through a cyclic prefix (e.g., CP) extension and/or single or a plurality of start-symbol puncturing, a part of channel sensing for each transmission may be determined as busy, and a problem may occur in that frequency-division multiplexing (e.g., FDM) among different resources within a same resource block (e.g., RB) set cannot be supported.

Meanwhile, in a case of inter-UE (e.g., SL) mode 2 resource (re)selection, a problem in which transmission resources for different transmissions overlap with each other may be avoided or mitigated through reservation resources indicated in a previous transmission.

For example, when a UE selects a cyclic prefix extension (e.g., CPE) candidate value according to CAPC, the CAPC value may be the CAPC value for an inter-UE (e.g., SL) channel to which a cyclic prefix extension (e.g., CPE) is to be applied.

For example, when a UE selects a cyclic prefix extension (e.g., CPE) candidate value according to CAPC, the CAPC value may be the CAPC value referenced when a channel access procedure is performed for an inter-UE (e.g., SL) channel to which a cyclic prefix extension (e.g., CPE) is to be applied, and/or may be different from a CAPC value for the inter-UE (e.g., SL) channel. For example, the CAPC value may be a representative CAPC value for an inter-UE (e.g., SL) transmission burst to which the inter-UE (e.g., SL) channel belongs. For example, a representative CAPC value for the inter-UE (e.g., SL) transmission burst may be selected in a limited scheme from that for a physical channel transmission (e.g., PSCCH/PSSCH transmission).

For example, when a UE (pre)configures a plurality of cyclic prefix extension (e.g., CPE) candidates for a physical channel transmission (e.g., PSCCH/PSSCH transmission), a unit of the (pre)configuration may be a L1 priority group and/or a CAPC group. For example, the L1 priority and/or the CAPC group may be configured with consecutive L1 priority values and/or CAPC values. For example, the L1 priority group and/or the CAPC group may be predefined or (pre)configured. For example, a size of the L1 priority group and/or the CAPC group may be different from each other, and/or a same value may not be overlapped. The scheme may be advantageous in configuring a plurality of cyclic prefix extension (e.g., CPE) candidate values for each priority group when a total number of candidates for a cyclic prefix extension (e.g., CPE) is limited.

According to an embodiment of the present disclosure, when a plurality of cyclic prefix extensions (e.g., CPEs) are configured for a physical channel transmission (e.g., PSCCH/PSSCH transmission) and/or when a resource reservation is transmitted for a UE's physical channel transmission (e.g., PSCCH/PSSCH transmission), the UE may differently determine whether to use a default cyclic prefix extension (e.g., CPE) according to a transmit power for a physical channel (e.g., PSCCH/PSSCH) and/or whether to select a cyclic prefix extension (e.g., CPE) value among a plurality of cyclic prefix extension (e.g., CPE) candidates.

For example, when a transmit power value is less than or less than or equal to a (pre)configured threshold value in the above, a cyclic prefix extension (e.g., CPE) value may be selected among a plurality of cyclic prefix extension (e.g., CPE) candidates, and/or when the transmit power value is greater than or greater than or equal to a (pre)configured threshold value, a default cyclic prefix extension (e.g., CPE) may be used.

For example, in the above, according to a range of a transmit power value, whether to use a default cyclic prefix extension (e.g., CPE) and/or whether to select a cyclic prefix extension (e.g., CPE) value among a plurality of cyclic prefix extension (e.g., CPE) candidates may be (pre)configured.

According to an embodiment of the present disclosure, for an initial transmission, a random cyclic prefix extension (e.g., CPE) selection may be used, and for a physical channel (e.g., PSCCH/PSSCH) to be transmitted after a reservation resource is indicated through inter-UE control information (e.g., SCI), a default cyclic prefix extension (e.g., CPE) may be used.

Meanwhile, a base station (e.g., gNB) may allow a plurality of UEs to perform frequency-division multiplexing (e.g., FDM) for an initial transmission. For example, the operation may be a base station implementation.

According to an embodiment of the present disclosure, a UE may, as a start position of cyclic prefix extension (e.g., CPE) for a physical channel transmission (e.g., PSCCH/PSSCH transmission), randomly select among start position candidate values of cyclic prefix extension (e.g., CPE) (pre-)configured (per priority or CAPC) or use a (pre-)configured default cyclic prefix extension (e.g., CPE) start position value.

According to an embodiment of the present disclosure, when a physical channel transmission (e.g., PSCCH/PSSCH transmission) resource is indicated by a base station-to-UE control information (e.g., DCI) and/or when the resource is a dynamic grant (e.g., DG), a cyclic prefix extension (e.g., CPE) selection scheme may be indicated by a base station-to-UE control information (e.g., DCI).

For example, when a physical channel transmission (e.g., PSCCH/PSSCH transmission) resource is configured by a radio resource control (e.g., RRC) and/or when the resource is a configured grant (e.g., CG), a cyclic prefix extension (e.g., CPE) selection scheme may be configured by a radio resource control (e.g., RRC).

According to an embodiment of the present disclosure, the physical channel transmission (e.g., PSCCH/PSSCH transmission) may be limited to the first resource in time among physical channels (e.g., PSCCH/PSSCH) indicated in a base station-to-UE control information (e.g., DCI),

For example, the PSSCH/PSSCH transmission may be limited to the first resource of each period in a case of a configured grant (e.g., CG).

For example, the physical channel transmission (e.g., PSCCH/PSSCH transmission) may be each physical channel (e.g., PSCCH/PSSCH) resource indicated in a base station-to-UE control information (e.g., DCI), and/or each cyclic prefix extension (e.g., CPE) selection scheme may be indicated to be all the same or different per physical channel (e.g., PSCCH/PSSCH).

For example, the physical channel transmission (e.g., PSCCH/PSSCH transmission) may be each physical channel (e.g., PSCCH/PSSCH) resource within a period for a configured grant (e.g., CG), and/or each cyclic prefix extension (e.g., CPE) selection scheme may be indicated to be all the same or different per physical channel (e.g., PSCCH/PSSCH). For example, the physical channel transmission (e.g., PSCCH/PSSCH transmission) may indicate/configure a cyclic prefix extension (e.g., CPE) selection scheme differently per period for a configured grant (e.g., CG).

For example, when a physical channel transmission (e.g., PSCCH/PSSCH transmission) resource corresponds to a configured grant (e.g., CG) resource, a start position of a default cyclic prefix extension (e.g., CPE) may be used.

For example, it may be limited such that only a part of physical resource blocks (e.g., PRBs) within a resource block (e.g., RB) set(s) are used as a physical channel transmission (e.g., PSCCH/PSSCH transmission) resource of the configured grant (e.g., CG). That is, for example, when all physical resource blocks (e.g., PRBs) are used for a resource block (e.g., RB) set(s), a scheme of randomly selecting a start position of a cyclic prefix extension (e.g., CPE) may be used.

For example, among dynamic grants (e.g., DGs), a retransmission dynamic grant (e.g., DG) for a configured grant (e.g., CG) may use a start position of a default cyclic prefix extension (e.g., CPE) again.

According to an embodiment of the present disclosure, a UE that is scheduled, through an inter-UE (e.g., SL) dynamic grant (e.g., DG) and/or an inter-UE configured grant (e.g., SL CG) from a base station, for inter-UE (e.g., SL) resources for an unlicensed band or a shared spectrum may indicate a non-zero value as a resource reservation period value when transmitting a physical channel (e.g., PSCCH/PSSCH) by using the resource. For example, the resource reservation period indication value may be a resource period value for the inter-UE configured grant (e.g., SL CG) or a value derived therefrom in a case of the inter-UE configured grant (e.g., SL CG).

According to an embodiment of the present disclosure, when a UE performs resource (re)selection, the UE may exclude, from a available resource set, a potential reservation resource corresponding to a non-monitored slot and/or a resource for a reference channel sensing duration for the potential reservation resource, and/or may deprioritize the resources when selecting a transmission resource, and the reference channel sensing duration may be a (pre)configured value for a specific CAPC value. For example, a CAPC value for the non-monitored slot may be a minimum CAPC value and/or a maximum CAPC value and/or a separately (pre)configured value.

According to an embodiment of the present disclosure, a UE may, for a transmission (through a COT sharing), select a type-2 series channel access type among 2A, 2B, and 2C based on a time difference between a transmission of a COT-initializing UE and a transmission of a current UE.

For example, in this case, the time gap may be determined at a receiving UE based on a received and detected (L1) ID.

And/or, for example, the time gap may be determined based on a transmission determined based on previously received reservation resource information (a resource location and an (L1) ID) and/or based on a determination of whether an actual transmission occurs at an actual reservation resource location.

For example, a transmission from the COT-initiating UE may be determined based on an (L1) source ID and/or a destination ID for data of a physical channel (e.g., PSCCH/PSSCH) including COT sharing information.

And/or, for example, a transmission from the COT-initiating UE may be determined based on an additional ID included in COT sharing information.

According to an embodiment of the present disclosure, when a multiple consecutive slot transmission (e.g., multi-consecutive slot transmission (MCSt)) is generated for a (same) TB, a UE may, when (re)selecting a resource, select a next candidate multi-slot resource such that a HARQ RTT constraint is satisfied from an end time point of the last slot of a resource group for a previously selected candidate multi-slot resources between consecutive resource groups.

And/or, for example, when a resource (re)selection is performed by replacing a candidate single-slot resource with a candidate multi-slot resource, a UE may, when (re)selecting a resource, select a next candidate multi-slot resource such that a HARQ RTT constraint is satisfied from an end time point of the last slot of a resource group for a previously selected candidate multi-slot resource between consecutive resource groups.

And/or, for example, when an inter-UE physical feedback channel (e.g., PSFCH) resource is configured in a transmission resource pool, a UE may, when (re)selecting a resource, select a next candidate multi-slot resource such that a HARQ RTT constraint is satisfied from an end time point of the last slot of a resource group for a previously selected candidate multi-slot resource between consecutive resource groups.

And/or, for example, when an inter-UE (e.g., SL) grant for a resource (re)selection is enabled for inter-UE feedback (e.g., SL HARQ-ACK feedback), a UE may, when (re)selecting a resource, select a next candidate multi-slot resource such that a HARQ RTT constraint is satisfied from an end time point of the last slot of a resource group for a previously selected candidate multi-slot resource between consecutive resource groups.

In an inter-UE communication (e.g., SL communication) operation in an unlicensed band, whole or part of following operations may be supported.

According to an embodiment of the present disclosure, in a transmission based on adjacent resource blocks (e.g., RBs), candidate single-slot resources excluding the lowest subchannel including intra-cell guard-band physical resource blocks (e.g., PRBs) may be excluded from an initial set S_A in step 4 of a resource selection procedure.

For example, in receiving an inter-UE synchronization signal block (e.g., S-SSB) within one or more resource block (e.g., RB) sets, alternative 1 below may be supported.

Alternative 1: At least power on an anchor resource block (e.g., RB) set for an inter-UE synchronization signal block (e.g., S-SSB) transmission may not change due to the number of resource block (e.g., RB) sets used.

Here, for example, a UE may allocate a transmit power to an inter-UE synchronization signal block (e.g., S-SSB) transmission on an anchor resource block (e.g., RB) set, and a remaining power may be uniformly distributed to inter-UE synchronization signal block (e.g., S-SSB) transmissions on other resource block (e.g., RB) set(s).

For example, a UE may perform a non-identical power allocation for an inter-UE synchronization signal block (e.g., S-SSB) for a resource block (e.g., RB) set other than an anchor resource block (e.g., RB) set, and/or in the above case, the selection may depend on a UE implementation.

According to an embodiment of the present disclosure, when neither a COT-initiating UE nor a responding UE intends to transmit an inter-UE physical feedback channel (e.g., PSFCH) on transmission occasion(s) of an inter-UE physical feedback channel (e.g., PSFCH) within a COT in order to avoid a COT collision, option 2 below may be supported.

Option 2: a COT-initiating UE or a responding UE may transmit a signal such as an inter-UE physical feedback channel (e.g., PSFCH) on transmission occasion(s) of such an inter-UE physical feedback channel (e.g., PSFCH).

Here, for example, resources not used for an actual control-information signaling (e.g., physical resource blocks (e.g., PRBs) outside a resource set of an inter-UE physical feedback channel (e.g., PSFCH), inter-UE physical feedback channel (e.g., PSFCH) resources related to a transmitted inter-UE physical shared channel (e.g., PSSCH), a common interlace) may be used.

Here, for example, a sequence mapped to a signal such as the inter-UE physical feedback channel (e.g., PSFCH) may depend on a UE implementation.

According to an embodiment of the present disclosure, in an inter-UE physical feedback channel (e.g., PSFCH) on a common interlace, a single common interlace may be (pre)configured per resource pool.

Here, for example, for a plurality of inter-UE physical feedback channel (e.g., PSFCH) transmissions having the same or different minimum inter-UE physical shared channel-to-inter-UE physical feedback channel (e.g., PSSCH-to-PSFCH) timing, a UE may use a single common interlace.

For example, an implicit inter-UE physical shared channel-to-inter-UE physical feedback channel (e.g., PSSCH-to-PSFCH) resource determination may be used to determine a dedicated anchor physical resource block (e.g., PRB).

Here, for example, a UE may select K3-1 dedicated physical resource block(s) (e.g., PRB(s)) among consecutive dedicated physical resource blocks (e.g., PRBs) belonging to the same interlace.

According to an embodiment of the present disclosure, in an inter-UE physical feedback channel (e.g., PSFCH) on a dedicated interlace, an implicit inter-UE physical shared channel-to-inter-UE physical feedback channel (e.g., PSSCH-to-PSFCH) resource determination may be used to determine an anchor dedicated physical resource block (e.g., PRB).

Here, for example, a UE may select a dedicated interlace including an anchor dedicated physical resource block (e.g., PRB).

According to an embodiment of the present disclosure, for an implicit inter-UE physical shared channel-to-inter-UE physical feedback channel (e.g., PSSCH-to-PSFCH) resource determination to select an anchor dedicated physical resource block (e.g., PRB), one of the following may be performed.

### Alternative 1:

For example, a resource block (e.g., RB) set(s) for an inter-UE physical feedback channel (e.g., PSFCH) may be selected based on a resource block (e.g., RB) set occupied by a corresponding inter-UE physical shared channel (e.g., PSSCH).

For example, for each selected resource block (e.g., RB) set, an inter-UE physical shared channel-to-inter-UE physical feedback channel (e.g., PSSCH-to-PSFCH) determination rule may be applied, based on a subchannel index and a slot index of an inter-UE physical shared channel (e.g., PSSCH), to determine an inter-UE physical feedback channel physical resource block (e.g., PSFCH PRB) sub-group.

For example, within a selected inter-UE physical feedback channel physical resource block (e.g., PSFCH PRB) sub-group, an inter-UE physical shared channel-to-inter-UE physical feedback channel (e.g., PSSCH-to-PSFCH) determination rule may be applied, based on an L1 source ID and/or an M_ID, to determine an anchor dedicated physical resource block (e.g., PRB) and a cyclic-shift pair.

### Alternative 2:

For example, among a group of (pre)configured physical resource blocks (e.g., PRBs) within (pre)configured resource block (e.g., RB) sets for an inter-UE physical feedback channel (e.g., PSFCH) transmission, an inter-UE physical feedback channel physical resource block (e.g., PSFCH PRB) group may be divided by a plurality of resource block (e.g., RB) sets * subchannels * an inter-UE physical feedback channel (e.g., PSFCH) period.

For example, an inter-UE physical feedback channel physical resource block (e.g., PSFCH PRB) sub-group indexing may be performed in an ascending order of a slot index, a subchannel index, and a resource block (e.g., RB) set index.

For example, within a subset of inter-UE physical feedback channel (e.g., PSFCH) resources, a UE may select an anchor dedicated physical resource block (e.g., PRB) and a cyclic-shift pair based on an L1 source ID and/or an M_ID.

For example, a UE may use the lowest of the selected resource block (e.g., RB) set for an inter-UE physical feedback channel (e.g., PSFCH) transmission, or may use all or a part of selected resource block (e.g., RB) sets.

In an embodiment of the present disclosure, a scheme in which an anchor dedicated physical resource block (e.g., PRB) is selected and, based thereon, remaining dedicated physical resource blocks (e.g., PRBs) and/or a dedicated interlace are determined may also be expressed as being extended/modified into a scheme in which a dedicated interlace is determined and, based thereon, dedicated physical resource block(s) (e.g., PRB(s)) are determined.

For example, a set (pre)configured with an inter-UE physical feedback channel physical resource block (e.g., PSFCH PRB) and a resource block (e.g., RB) set may be limited as a target for selecting an anchor dedicated physical resource block (e.g., PRB), and/or (remaining) dedicated physical resource blocks (e.g., PRBs) may also be selected within a (pre)configured physical resource block (e.g., PRB) group.

For example, when remaining dedicated physical resource blocks (e.g., PRBs) are derived from an anchor dedicated physical resource block (e.g., PRB), a next physical resource block (e.g., PRB) after the anchor dedicated physical resource block (e.g., PRB) in a physical resource block (e.g., PRB) set of an interlace to which the anchor dedicated physical resource block (e.g., PRB) belongs, or a next physical resource block (e.g., PRB) among those belonging to an inter-UE physical feedback channel physical resource block (e.g., PSFCH PRB) group, may be selected.

For example, when remaining dedicated physical resource blocks (e.g., PRBs) are derived from an anchor dedicated physical resource block (e.g., PRB), a physical resource block (e.g., PRB) after a (pre)configured gap from the anchor dedicated physical resource block (e.g., PRB) in a physical resource block (e.g., PRB) set of an interlace to which the anchor dedicated physical resource block (e.g., PRB) belongs, or a next physical resource block (e.g., PRB) belonging to an inter-UE physical feedback channel physical resource block (e.g., PSFCH PRB) group after the (pre)configured gap, may be selected.

According to an embodiment of the present disclosure, since resource block (e.g., RB) sets may include different numbers of physical resource blocks (e.g., PRBs), a value of a gap and a value of N may need to be (pre)configured separately for each resource block (e.g., RB) set.

For example, for inter-UE synchronization signal block (e.g., S-SSB) repetition(s) for each resource block (e.g., RB) set to satisfy an OCB requirement, a value of N may be (pre)configured per resource block (e.g., RB) set among 1 to 8, and a value of a gap may be (pre)configured per resource block (e.g., RB) set among 0 to 66.

In the above, values of each parameter are merely examples, and a part of the values may be selected as candidates for a value.

Meanwhile, when a dynamic inter-UE (e.g., SL) resource allocation through base station-to-UE control information (e.g., DCI) and/or a configured grant (e.g., CG) type 2 activation is performed in a mode 1 operation, a time interval between a reception time point of the base station-to-UE control information (e.g., DCI) or a last symbol in which a base station-to-UE physical control channel (e.g., PDCCH) including base station-to-UE control information (e.g., DCI) is mapped and the last symbol of a control resource set (e.g., CORESET), and a start position (including a cyclic prefix (e.g., CP)) of an inter-UE (e.g., SL) transmission (allocated the first), may be determined according to a specific UE processing time.

According to an embodiment of the present disclosure, the following characteristics described below may be applied to the UE processing time.

For example, in an inter-UE dynamic grant (e.g., SL DG) and an inter-UE configured grant (e.g., SL CG) type 2 activation, when a first inter-UE (e.g., SL) symbol in an inter-UE communication (e.g., SL communication) allocation for an inter-UE physical shared channel (e.g., PSSCH) and a related inter-UE physical control channel (e.g., PSCCH) for a transport block, which is defined by a slot offset K_SL of scheduling base station-to-UE control information (e.g., DCI) for the inter-UE dynamic grant or activation base station-to-UE control information (e.g., DCI) for the inter-UE configured grant (e.g., CG) type 2, and including a demodulation reference signal (e.g., DM-RS) and duplicated symbols, is not earlier than symbol L, the UE may have to transmit the inter-UE physical shared channel (e.g., PSSCH) and the related inter-UE physical control channel (e.g., PSCCH).

Here, for example, the L may be defined as a next inter-UE (e.g., SL) symbol of a cyclic-prefix start that is after T_{proc} = (N₂ + d_{2,1})(2048 + 144)•κ2^{-µ}•T_{C} + Tₑₓₜ from an end of reception of a last symbol of a base station-to-UE physical control channel (e.g., PDCCH) that delivers base station-to-UE control information (e.g., DCI) for scheduling an inter-UE transmission (e.g., SL transmission) for the inter-UE dynamic grant or base station-to-UE control information (e.g., DCI) for activating an inter-UE configured grant (e.g., SL CG) type 2.

Here, for example, the N₂ may be determined based on µ of Table 7. Here, for example, µ may correspond to one of (µ_{DL}, µ_{SL}) that makes T_{proc} largest. Here, the µ_{DL} may correspond to a subcarrier spacing of a base station-to-UE communication in which a base station-to-UE physical control channel (e.g., PDCCH) that delivers base station-to-UE control information (e.g., DCI) for scheduling an inter-UE transmission (e.g., SL transmission) for the inter-UE dynamic grant or base station-to-UE control information (e.g., DCI) for activating an inter-UE configured grant (e.g., SL CG) type 2 is transmitted, and the µ_{SL} may correspond to a subcarrier spacing of an inter-UE channel (e.g., SL channel) in which an inter-UE physical shared channel (e.g., PSSCH) and a related inter-UE physical control channel (e.g., PSCCH) are transmitted.

For example, in an operation of a shared-spectrum channel access in FR1, a Tₑₓₜ may be calculated according to parameters below and Table 8. For example, an index i of Cᵢ and Δᵢ may be set to '1' when µ_{SL} is 0, may be set to '3' when µ_{SL} is 1, and may be set to '2' when µ_{SL} is 2. In other cases, the Tₑₓₜ may be 0. For example, the d_{2,1} may be 1.

In other cases, for example, a UE may ignore base station-to-UE control information (e.g., DCI) for scheduling an inter-UE transmission (e.g., SL transmission) for an inter-UE dynamic grant or base station-to-UE control information (e.g., DCI) for activating an inter-UE configured grant (e.g., SL CG) type 2.

For example, a value of a T_{proc} may be used for both a normal and an extended cyclic prefix.

**[Table 7]**

| *µ* | inter-UE physical control channel preparation time N₂ [number of symbols] |
|---|---|
| 0 | 10 |
| 1 | 12 |
| 2 | 23 |
| 3 | 36 |

According to an embodiment of the present disclosure, in an inter-UE (e.g., SL) resource allocation mode 1, a UE may not expect that a first inter-UE (e.g., SL) symbol in an inter-UE allocation for an inter-UE physical shared channel (e.g., PSSCH) and a related inter-UE physical control channel (e.g., PSCCH) for a retransmission of a transport block, defined by a "time resource allocation" field of corresponding base station-to-UE control information (e.g., DCI) for an inter-UE dynamic grant or an inter-UE (e.g., SL) configured grant type 2 or by the sl-TimeResourceCG-Type1 for a configured grant type 1, including a demodulation reference signal (e.g., DM-RS) and duplicated symbols, starts earlier than symbol L.

Here, for example, the L may be defined as a next inter-UE (e.g., SL) symbol of a cyclic-prefix start that is after Tₚᵣₑₚ + δ from an end of a last symbol of an inter-UE physical feedback channel (e.g., PSFCH) occasion corresponding to a most recent inter-UE physical shared channel (e.g., PSSCH) transmission for a same transport block. For example, the δ may be 5•10⁻⁴ s. In other cases, the UE may omit a retransmission of an inter-UE physical shared channel (e.g., PSSCH) and a transmission of a related inter-UE physical control channel (e.g., PSCCH).

**[Table 8]**

| Index i | µ = 0 | | µ = 1 | | µ = 2 | |
|---|---|---|---|---|---|---|
| | Cᵢ | Δᵢ | Cᵢ | Δᵢ | Cᵢ | Δᵢ |
| 0 | - | - | - | - | - | - |
| 1 | 1 | 16•10⁻⁶ | 1 | 16•10⁻⁶ | 1 | 16•10⁻⁶ |
| 2 | 1 | 25•10⁻⁶ | 1 | 25•10⁻⁶ | 2 | 16•10⁻⁶ |
| 3 | 1 | 34•10⁻⁶ | 2 | 16•10⁻⁶ | 2 | 25•10⁻⁶ |
| 4 | 1 | 43•10⁻⁶ | 2 | 25•10⁻⁶ | - | - |
| 5 | 1 | 52•10⁻⁶ | 2 | 34•10⁻⁶ | - | - |
| 6 | 1 | 61•10⁻⁶ | 2 | 43•10⁻⁶ | - | - |
| 7 | - | - | 2 | 52•10⁻⁶ | - | - |
| 8 | - | - | 2 | 61•10⁻⁶ | - | - |

Meanwhile, when an additional cyclic prefix extension (e.g., CPE) is added for an inter-UE (e.g., SL) transmission, the UE processing time may need to be extended accordingly. Meanwhile, a start position of a cyclic prefix extension (e.g., CPE) of an inter-UE communication (e.g., SL communication) may be determined by a UE, and/or a base station may not accurately know the information.

For example, a time length of the UE processing time may become longer by 1 OFDM-symbol length. For example, the time length of the UE processing time may become longer by 2 OFDM-symbol lengths (at least when a subcarrier spacing (e.g., SCS) is 30 kHz and/or 60 kHz).

For example, a time length of the UE processing time may become longer by a duration corresponding to a (pre)configured cyclic prefix extension (e.g., CPE) length or a longest one among start positions of a cyclic prefix extension (e.g., CPE). For example, the longest cyclic prefix extension (e.g., CPE) length may be determined among cyclic prefix extension (e.g., CPE) candidate values for a COT initiation or an external case and/or among cyclic prefix extension (e.g., CPE) candidate values for a COT sharing or an internal case.

For example, a time length of the UE processing time may be determined as a longest time length among time lengths determined based on cyclic prefix extension (e.g., CPE) candidate values. Here, for example, the cyclic prefix extension (e.g., CPE) candidate values may be determined differently according to a subcarrier spacing and the like.

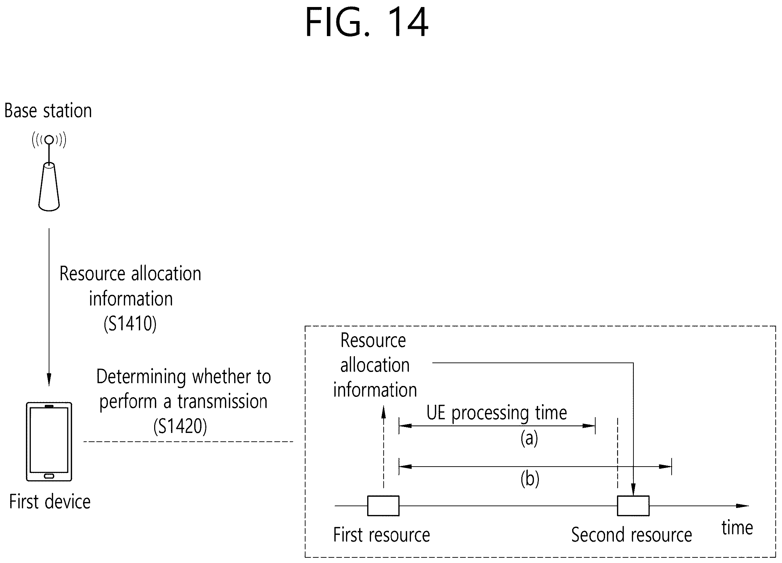

FIG. 14 shows a procedure in which a device determines whether to perform an inter-UE transmission (e.g., SL transmission) based on the UE processing time according to an embodiment of the present disclosure. An embodiment of FIG. 14 may be combined with various embodiments of the present disclosure.

Referring to FIG. 14, a base station that allocates a resource for a first device to perform an inter-UE transmission (e.g., SL transmission) and the first device are shown.

In step S1410, the base station may transmit resource allocation information to the first device. For example, the resource allocation information may include information for a second resource for an inter-UE transmission (e.g., SL transmission). For example, the resource allocation information may be received in a first resource.

In step S 1420, the first device may determine whether to perform an inter-UE transmission (e.g., SL transmission) based on a reception time point of the first resource, the second resource, and the UE processing time.

For example, as in (a), when a time interval between an end time point (e.g., a last symbol) of the first resource and a start time point (e.g., a first symbol) of the second resource is longer than the UE processing time, the first device may determine to perform the inter-UE transmission (e.g., SL transmission).

For example, as in (b), when a time interval between an end time point (e.g., a last symbol) of the first resource and a start time point (e.g., a first symbol) of the second resource is shorter than the UE processing time, the first device may determine not to perform the inter-UE transmission (e.g., SL transmission).

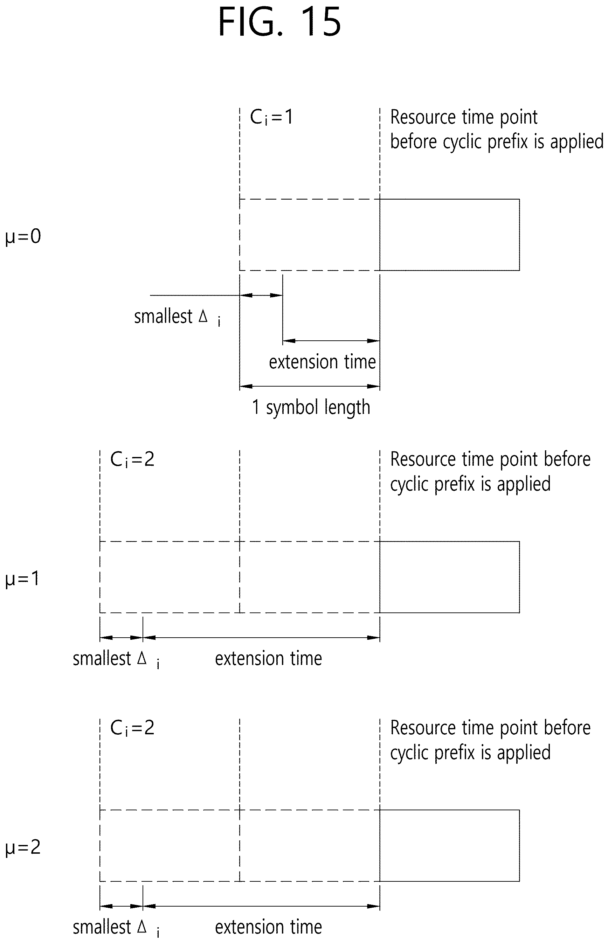

FIG. 15 shows a method for determining a longest extension time according to a numerology according to an embodiment of the present disclosure. An embodiment of FIG. 15 may be combined with various embodiments of the present disclosure.

Referring to FIG. 15, a first symbol of a transmission resource before a cyclic prefix extension is applied and a time duration to be extended when the cyclic prefix extension is applied are shown according to each subcarrier spacing (e.g., SCS) (µ).

After the cyclic prefix extension is applied, a start time point of a resource may be determined by determining an earlier time point, in symbol units, from a first symbol of a resource before the cyclic prefix extension is applied (e.g., an earlier time point by Cᵢ symbols from a resource time point before the cyclic-prefix application) and then determining a time point after a specific time length (Δᵢ) from the time point. Here, a time length of a time interval from the start time point of the resource after the cyclic prefix extension is applied to the first symbol of the resource before the cyclic prefix extension is applied (an extension time of FIG. 15) may mean a cyclic prefix extension length described in the present disclosure. Here, i may mean a (pre)defined cyclic-prefix index.

For example, referring to Table 8, when µ is 0, since a maximum Cᵢ is 1 when a cyclic prefix is applied, a time point after a minimum allowed Δᵢ (16•10⁻⁶ s in this case) from a time point that is 1 symbol earlier than a resource time point before the cyclic-prefix application may become a time point of a resource to which the cyclic prefix extension is applied. A time interval from the time point of the resource after the cyclic prefix extension is applied to the resource time point before the cyclic-prefix application may become an extension time, and the extension time may be included in the UE processing time. In this case, the i may be 1.

For example, referring to Table 8, when µ is 1, since a maximum Cᵢ is 2 when a cyclic prefix is applied, a time point after a minimum allowed Δᵢ (16•10⁻⁶ s in this case) from a time point that is 2 symbols earlier than a resource time point before the cyclic-prefix application may become a time point of a resource to which the cyclic prefix extension is applied. A time interval from the time point of the resource after the cyclic prefix extension is applied to the resource time point before the cyclic-prefix application may become an extension time, and the extension time may be included in the UE processing time. In this case, the i may be 3.

For example, referring to Table 8, when µ is 2, since a maximum Cᵢ is 2 when a cyclic prefix is applied, a time point after a minimum allowed Δᵢ (16•10⁻⁶ s in this case) from a time point that is 2 symbols earlier than a resource time point before the cyclic-prefix application may become a time point of a resource to which the cyclic prefix extension is applied. A time interval from the time point of the resource after the cyclic prefix extension is applied to the resource time point before the cyclic-prefix application may become an extension time, and the extension time may be included in the UE processing time. In this case, the i may be 2.

Meanwhile, when a cyclic prefix extension (e.g., CPE) scheme is semi-statically determined (by a random-selection scheme) for a configured grant (e.g., CG), a need may occur for a gNB to allocate, through a dynamic grant (e.g., DG), inter-UE (e.g., SL) resources that are frequency-division-multiplexed (e.g., FDM) subsequently.

In this case, for example, a selection scheme for a cyclic prefix extension (e.g., CPE) for a configured grant (e.g., CG) and/or an inter-UE (e.g., SL) transmission resource of a dynamic grant (e.g., DG) may be updated through a third base station-to-UE control information (e.g., DCI) that overwrites them.

According to an embodiment of the present disclosure, a UE may report to the base station (e.g., gNB) whether there is a change in the cyclic prefix extension (e.g., CPE) selection scheme and/or information related thereto.

For example, in a case of a radio resource control (e.g., RRC) configuration, it may be applied differently depending on whether it is a full resource block (e.g., RB) set or a partial resource block (e.g., RB) set. Or, for example, regardless of the radio resource control (e.g., RRC) configuration, the cyclic prefix extension (e.g., CPE) selection scheme may differ depending on whether it is a full resource block (e.g., RB) set or a partial resource block (e.g., RB) set. For example, in a full resource block (e.g., RB) set allocation, a cyclic prefix extension (e.g., CPE) may be selected by a random scheme, and in a partial resource block (e.g., RB) set allocation, a basic cyclic prefix extension (e.g., CPE) may be used.

In various embodiments of the present disclosure, a full resource block (e.g., RB) set allocation may mean a case where all physical resource blocks (e.g., PRBs) within a resource block (e.g., RB) set are used for transmission for all or part of an allocated resource block (e.g., RB) set.

In various embodiments of the present disclosure, a partial resource block (e.g., RB) set allocation may mean a case where some physical resource blocks (e.g., PRBs) within a resource block (e.g., RB) set are used for transmission for all or part of an allocated resource block (e.g., RB) set.

In various embodiments of the present disclosure, a (pre)configuration per partial resource block (e.g., RB) set allocation may be performed and/or may differ per a number (range) of allocated physical resource blocks (e.g., PRBs) within a resource block (e.g., RB) set and/or per a ratio (range) of the number of allocated physical resource blocks (e.g., PRBs) to a total number of physical resource blocks (e.g., PRBs).

In various embodiments of the present disclosure, a transmission using a type 2 channel access may represent a transmission within a COT duration, and/or a transmission using a type 1 channel access may represent a transmission outside the COT duration or a transmission at a COT initiation.

In various embodiments of the present disclosure, various schemes may be applied differently according to a CAPC value and/or an inter-UE (e.g., SL) priority value and/or a (remaining) counter value of a type 1 channel-access procedure and/or a size of a contention window of the type 1 channel-access procedure.

Various embodiments of the present disclosure may be applied differently according to an inter-UE (e.g., SL) resource-selection method and an operation method (for example, a mode 1 operation or a mode 2 operation) or according to a coverage state of a UE (e.g., INC (in-coverage) or OOC (out-of-coverage)).

Schemes described in various embodiments of the present disclosure may be applied differently according to an inter-UE (e.g., SL) channel and/or whether a physical-channel transmission (e.g., PSCCH/PSSCH transmission) is performed outside a COT duration or inside the COT duration.

Schemes described in various embodiments of the present disclosure may be applied differently according to an SCS and/or a resource block (e.g., RB) set and/or a size of a resource block (e.g., RB) set.

In various embodiments of the present disclosure, a transmission located outside a COT duration may be interpreted as a transmission used at a COT initiation and/or a transmission based on a type 1 channel-access procedure.

Various embodiments of the present disclosure may differ and/or may be configured per a resource pool, and/or per transmissions outside and/or inside a resource pool, and/or per a QoS parameter, and/or per a CAPC, and/or per an inter-UE (e.g., SL) priority, and/or per inside or outside a COT duration (at a COT initiation), and/or per a transmission order within a multiple consecutive slot transmission (e.g., MCSt), and/or per an inter-UE (e.g., SL) channel type, and/or per a resource-block (e.g., RB) set, and/or per an inter-UE partial bandwidth (e.g., SL BWP), and/or per an inter-UE (e.g., SL) carrier, and/or per a congestion-control level, and/or per a transmission operation or a reception operation, and/or per a transmit-power level, and/or per a transmission start time point, and/or per a channel-access-procedure type for a transmission, and/or per an LBT failure ratio, and/or per whether the UE is a COT-initiator UE or a COT-responded UE or another UE, and/or per a cast type, and/or per whether inter-UE feedback (e.g., SL HARQ-ACK feedback) is enabled, and/or per a feedback (e.g., HARQ-ACK feedback) option, and/or per a number of transmission attempts for same information or a transport block (e.g., TB).

For example, in embodiments of the present disclosure, what is (pre-)configured may be performed per a resource pool and/or per transmissions outside and/or inside a resource pool and/or per a QoS parameter and/or per a CAPC and/or per an inter-UE (e.g., SL) priority and/or per inside or outside a COT duration (at a COT initiation) and/or per a transmission order within a multiple consecutive slot transmission (e.g., MCSt) and/or per an inter-UE (e.g., SL) channel type and/or per a resource-block (e.g., RB) set and/or per an inter-UE partial bandwidth (e.g., SL BWP) and/or per an inter-UE (e.g., SL) carrier and/or per a congestion-control level and/or per a transmission operation or a reception operation and/or per a transmit-power level and/or per a transmission start time point and/or per a channel-access-procedure type for a transmission and/or per an LBT failure ratio and/or per whether the UE is a COT-initiator UE or a COT-responded UE or another UE and/or per a cast type and/or per whether inter-UE feedback (e.g., SL HARQ-ACK feedback) is enabled and/or per a feedback (e.g., HARQ-ACK feedback) option and/or per a number of transmission attempts for same information or a transport block (e.g., TB).

The method proposed above may be applied to a device described below. First, a processor 202 of a receiving UE may configure at least a partial bandwidth (e.g., BWP). In addition, the processor 202 of the receiving UE may control a transceiver 206 of the receiving UE to receive, on at least a partial bandwidth (e.g., BWP), inter-UE communication (e.g., SL communication)-related physical channels and/or inter-UE communication (e.g., SL communication)-related reference signals from a transmitting UE.

Meanwhile, in mode 2 inter-UE communication (e.g., SL mode 2), a selection procedure for inter-UE cyclic prefix extension (e.g., CPE) is performed based on sensing information received by a transmitting UE. In contrast, in mode 1 inter-UE communication (e.g., SL mode 1), the transmitting UE does not perform sensing, and therefore, performing the selection procedure for inter-UE cyclic prefix extension (e.g., CPE) in mode 2 inter-UE communication (e.g., SL mode 2) in the same manner in mode 1 inter-UE communication (e.g., SL mode 1) may be inappropriate. Furthermore, when calculating a preparation time for an inter-UE physical shared channel (e.g., PSSCH) for mode 1 inter-UE communication (e.g., SL mode 1), a base station may not accurately recognize an actual cyclic prefix extension value (e.g., a CPE value) of a UE.

According to an embodiment of the present disclosure, a base station may indicate or set a type of a cyclic prefix extension (e.g., CPE) selection scheme for an inter-UE resource (e.g., SL resource). According to an embodiment of the present disclosure, when calculating a preparation time for an inter-UE physical shared channel (e.g., PSSCH), a longest cyclic prefix extension (e.g., CPE) length may be assumed.

According to various embodiments of the present disclosure, by allowing an optimized UE processing time to be used according to a numerology when a cyclic prefix extension is applied in an unlicensed band, a delay related to a transmission operation may be reduced, and wireless communication may be smoothly performed even when the cyclic prefix extension is applied. In addition, when mode-1 inter-UE communication is performed, a procedure for selecting a value related to a cyclic prefix extension may be efficiently performed.

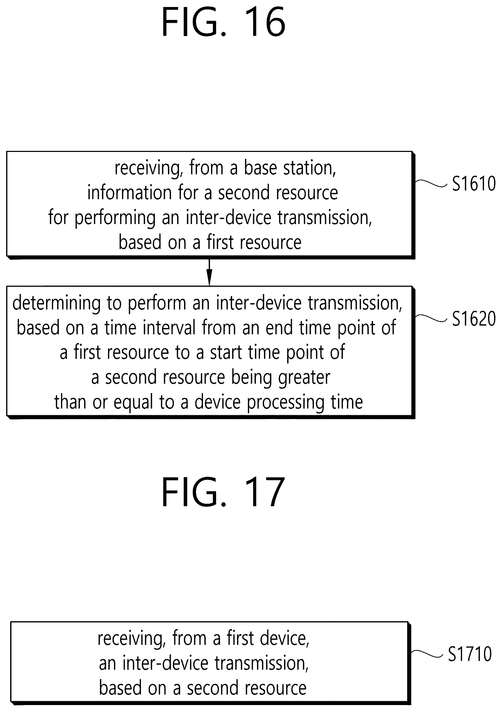

FIG. 16 shows a procedure in which a first device performs wireless communication according to an embodiment of the present disclosure. The embodiment of FIG. 16 may be combined with various embodiments of the present disclosure.

Referring to FIG. 16, in step S1610, a first device may receive, from a base station, information for a second resource for performing an inter-device transmission, based on a first resource. In step S 1620, the first device may determine to perform the inter-device transmission, based on a time interval from an end time point of the first resource to a start time point of the second resource being greater than or equal to a device processing time. For example, the device processing time may include a first extension time related to cyclic prefix extension, and the first extension time may be a longest extension time among a plurality of extension times related to cyclic prefix extension allowed to the inter-device transmission.

For example, the plurality of extension times, that include the first extension time, may be determined based on subcarrier spacing related to the inter-device transmission.

For example, additionally, the first device may receive, from the base station, information for a scheme in which the plurality of extension times are determined.

For example, the scheme in which the plurality of extension times are determined may include a scheme for using a default cyclic prefix extension value or a scheme in which the plurality of extension times are determined based on subcarrier spacing that is being used.

For example, whether to use a default cyclic prefix extension value for determining the plurality of extension times may be determined based on transmit power related to the inter-device transmission.

For example, the default cyclic prefix extension value may be used for determining the plurality of extension times, based on the transmit power being greater than or equal to a threshold value.

For example, the information for the second resource may be received as included in base station-to-device control information.

For example, the base station-to-device control information may be received through a base station-to-device physical control channel.

For example, a reception of the information for the second resource may be dynamic resource allocation.

For example, the end time point of the first resource may be a last symbol time point of the first resource.

For example, the first resource may be included in a control resource set.

For example, additionally, the first device may perform channel sensing related to a channel access procedure, based on the start time point of the second resource.

For example, the inter-device transmission may be performed based on a result of the channel sensing being IDLE.

The above-described embodiment may be applied to various devices described below. First, a processor 102 of a first device 100 may control a transceiver 106 to receive, from a base station 300, information for a second resource for performing an inter-device transmission, based on a first resource. And, the processor 102 of the first device 100 may determine to perform the inter-device transmission, based on a time interval from an end time point of the first resource to a start time point of the second resource being greater than or equal to a device processing time. For example, the device processing time may include a first extension time related to cyclic prefix extension, and the first extension time may be a longest extension time among a plurality of extension times related to cyclic prefix extension allowed to the inter-device transmission.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: receiving, from a base station, information for a second resource for performing an inter-device transmission, based on a first resource; and determining to perform the inter-device transmission, based on a time interval from an end time point of the first resource to a start time point of the second resource being greater than or equal to a device processing time, wherein the device processing time may include a first extension time related to cyclic prefix extension, and wherein the first extension time may be a longest extension time among a plurality of extension times related to cyclic prefix extension allowed to the inter-device transmission.

For example, the plurality of extension times, that include the first extension time, may be determined based on subcarrier spacing related to the inter-device transmission.

For example, additionally, the instructions may further comprise: receiving, from the base station, information for a scheme in which the plurality of extension times are determined.

For example, the scheme in which the plurality of extension times are determined may include a scheme for using a default cyclic prefix extension value or a scheme in which the plurality of extension times are determined based on subcarrier spacing that is being used.

For example, whether to use a default cyclic prefix extension value for determining the plurality of extension times may be determined based on transmit power related to the inter-device transmission.

For example, the default cyclic prefix extension value may be used for determining the plurality of extension times, based on the transmit power being greater than or equal to a threshold value.

For example, the information for the second resource may be received as included in base station-to-device control information.

For example, the base station-to-device control information may be received through a base station-to-device physical control channel.

For example, a reception of the information for the second resource may be dynamic resource allocation.

For example, the end time point of the first resource may be a last symbol time point of the first resource.

For example, the first resource may be included in a control resource set.

For example, additionally, the instructions may further comprise: performing channel sensing related to a channel access procedure, based on the start time point of the second resource.

For example, the inter-device transmission may be performed based on a result of the channel sensing being IDLE.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: receiving, from a base station, information for a second resource for performing an inter-UE transmission, based on a first resource; and determining to perform the inter-UE transmission, based on a time interval from an end time point of the first resource to a start time point of the second resource being greater than or equal to a UE processing time, wherein the UE processing time may include a first extension time related to cyclic prefix extension, and wherein the first extension time may be a longest extension time among a plurality of extension times related to cyclic prefix extension allowed to the inter-UE transmission.

According to an embodiment of the present disclosure, a non-transitory computer-readable storage medium storing instructions may be proposed. For example, based on being executed, the instructions may cause a first device to: receive, from a base station, information for a second resource for performing an inter-device transmission, based on a first resource; and determine to perform the inter-device transmission, based on a time interval from an end time point of the first resource to a start time point of the second resource being greater than or equal to a device processing time, wherein the device processing time may include a first extension time related to cyclic prefix extension, and wherein the first extension time may be a longest extension time among a plurality of extension times related to cyclic prefix extension allowed to the inter-device transmission.

FIG. 17 shows a procedure in which a second device performs wireless communication according to an embodiment of the present disclosure. The embodiment of FIG. 17 may be combined with various embodiments of the present disclosure.

Referring to FIG. 17, in step S1710, a second device may receive, from a first device, an inter-device transmission, based on a second resource. For example, the inter-device transmission may be determined to be performed based on a time interval from an end time point of a first resource to a start time point of the second resource being greater than or equal to a device processing time, the first resource may be a resource in which information for the second resource is received from a base station to the first device, the device processing time may include a first extension time related to cyclic prefix extension, and the first extension time may be a longest extension time among a plurality of extension times related to cyclic prefix extension allowed to the inter-device transmission.

For example, the end time point of the first resource may be a last symbol time point of the first resource.

The above-described embodiment may be applied to various devices described below. First, a processor 202 of a second device 200 may control a transceiver 206 to receive, from a first device 100, an inter-device transmission, based on a second resource. For example, the inter-device transmission may be determined to be performed based on a time interval from an end time point of a first resource to a start time point of the second resource being greater than or equal to a device processing time, the first resource may be a resource in which information for the second resource is received from a base station 300 to the first device 100, the device processing time may include a first extension time related to cyclic prefix extension, and the first extension time may be a longest extension time among a plurality of extension times related to cyclic prefix extension allowed to the inter-device transmission.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: receiving, from a first device, an inter-device transmission, based on a second resource, wherein the inter-device transmission may be determined to be performed based on a time interval from an end time point of a first resource to a start time point of the second resource being greater than or equal to a device processing time, wherein the first resource may be a resource in which information for the second resource is received from a base station to the first device, wherein the device processing time may include a first extension time related to cyclic prefix extension, and wherein the first extension time may be a longest extension time among a plurality of extension times related to cyclic prefix extension allowed to the inter-device transmission.

For example, the end time point of the first resource may be a last symbol time point of the first resource.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

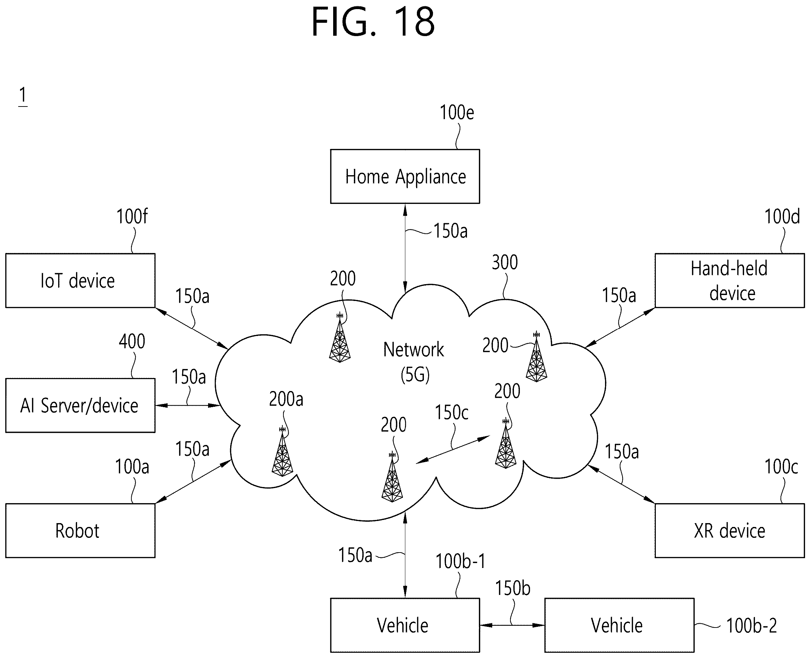

FIG. 18 shows a communication system 1, based on an embodiment of the present disclosure. The embodiment of FIG. 18 may be combined with various embodiments of the present disclosure.

Referring to FIG. 18, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

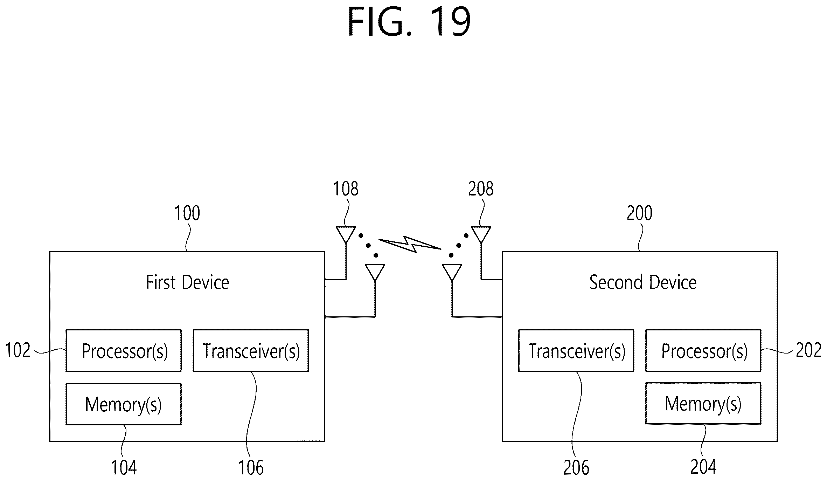

FIG. 19 shows wireless devices, based on an embodiment of the present disclosure. The embodiment of FIG. 19 may be combined with various embodiments of the present disclosure.

Referring to FIG. 19, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 18.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

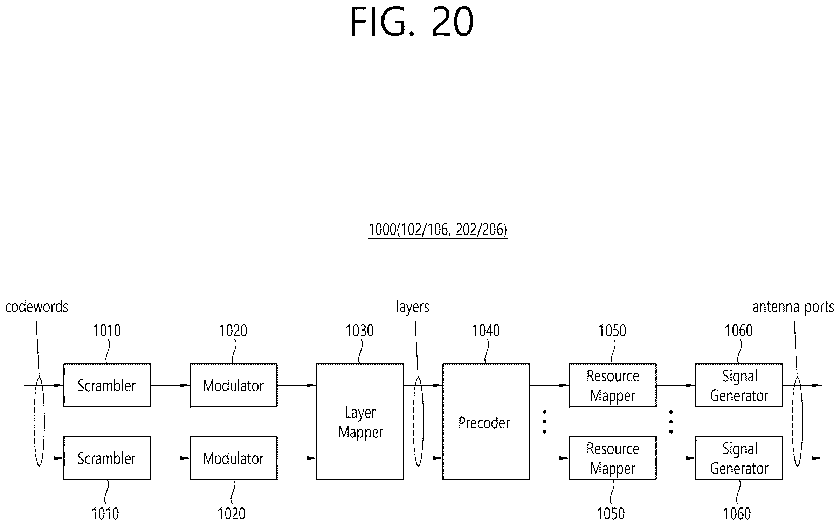

FIG. 20 shows a signal process circuit for a transmission signal, based on an embodiment of the present disclosure. The embodiment of FIG. 20 may be combined with various embodiments of the present disclosure.

Referring to FIG. 20, a signal processing circuit 1000 may include scramblers 1010, modulators 1020, a layer mapper 1030, a precoder 1040, resource mappers 1050, and signal generators 1060. An operation/function of FIG. 20 may be performed, without being limited to, the processors 102 and 202 and/or the transceivers 106 and 206 of FIG. 19. Hardware elements of FIG. 20 may be implemented by the processors 102 and 202 and/or the transceivers 106 and 206 of FIG. 19. For example, blocks 1010 to 1060 may be implemented by the processors 102 and 202 of FIG. 19. Alternatively, the blocks 1010 to 1050 may be implemented by the processors 102 and 202 of FIG. 19 and the block 1060 may be implemented by the transceivers 106 and 206 of FIG. 19.

Codewords may be converted into radio signals via the signal processing circuit 1000 of FIG. 20. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 20. For example, the wireless devices (e.g., 100 and 200 of FIG. 19) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

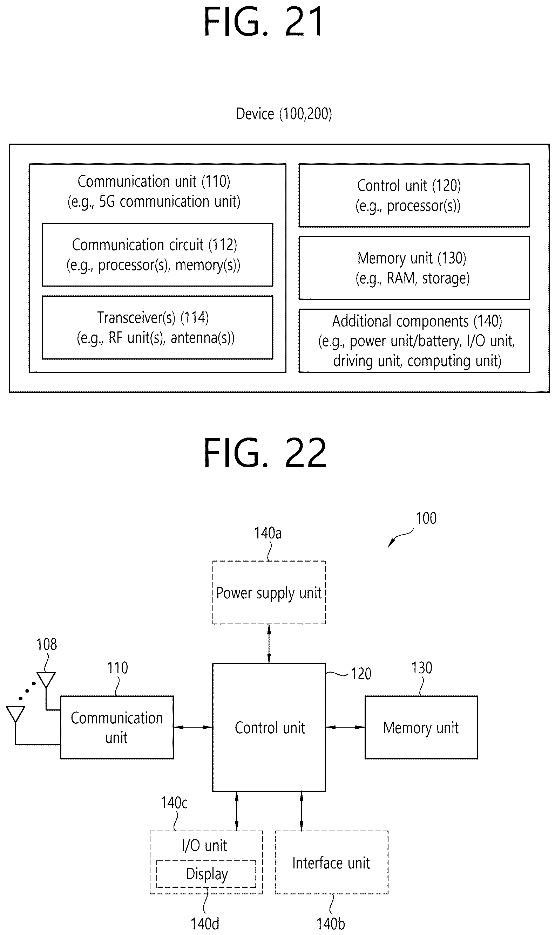

FIG. 21 shows another example of a wireless device, based on an embodiment of the present disclosure. The wireless device may be implemented in various forms according to a use-case/service (refer to FIG. 18). The embodiment of FIG. 21 may be combined with various embodiments of the present disclosure.

Referring to FIG. 21, wireless devices 100 and 200 may correspond to the wireless devices 100 and 200 of FIG. 19 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 19. For example, the transceiver(s) 114 may include the one or more transceivers 106 and 206 and/or the one or more antennas 108 and 208 of FIG. 19. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 18), the vehicles (100b-1 and 100b-2 of FIG. 18), the XR device (100c of FIG. 18), the hand-held device (100d of FIG. 18), the home appliance (100e of FIG. 18), the IoT device (100f of FIG. 18), a digital broadcast terminal, a hologram device, a public safety device, an MTC device, a medicine device, a fintech device (or a finance device), a security device, a climate/environment device, the AI server/device (400 of FIG. 18), the BSs (200 of FIG. 18), a network node, etc. The wireless device may be used in a mobile or fixed place according to a use-example/service.

In FIG. 21, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 21 will be described in detail with reference to the drawings.

FIG. 22 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless terminal (WT). The embodiment of FIG. 22 may be combined with various embodiments of the present disclosure.

Referring to FIG. 22, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 21, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

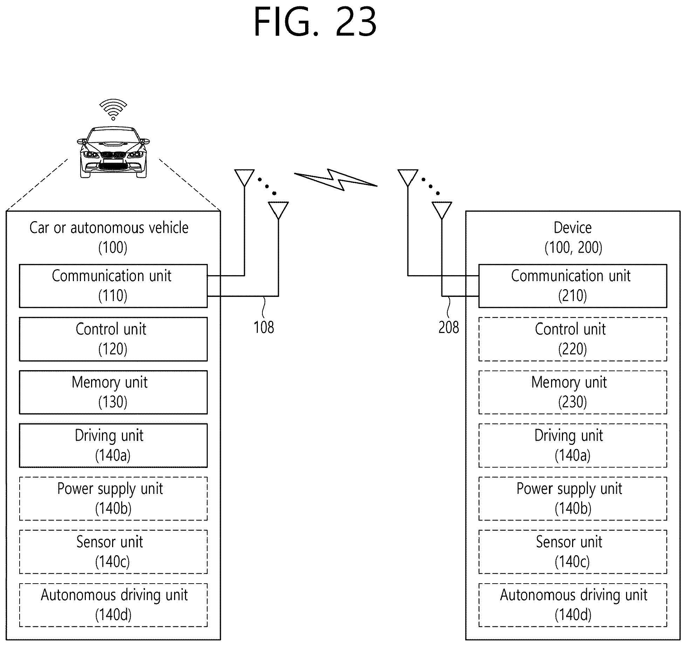

FIG. 23 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 23 may be combined with various embodiments of the present disclosure.

Referring to FIG. 23, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 21, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a conflict sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first device, wireless communication, the method comprising:
receiving, from a base station, information for a second resource for performing an inter-device transmission, based on a first resource; and
determining to perform the inter-device transmission, based on a time interval from an end time point of the first resource to a start time point of the second resource being greater than or equal to a device processing time,
wherein the device processing time includes a first extension time related to cyclic prefix extension, and
wherein the first extension time is a longest extension time among a plurality of extension times related to cyclic prefix extension allowed to the inter-device transmission.

2. The method of claim 1, wherein the plurality of extension times, that include the first extension time, are determined based on subcarrier spacing related to the inter-device transmission.

3. The method of claim 1, further comprising:
receiving, from the base station, information for a scheme in which the plurality of extension times are determined.

4. The method of claim 3, wherein the scheme in which the plurality of extension times are determined includes a scheme for using a default cyclic prefix extension value or a scheme in which the plurality of extension times are determined based on subcarrier spacing that is being used.

5. The method of claim 1, wherein whether to use a default cyclic prefix extension value for determining the plurality of extension times is determined based on transmit power related to the inter-device transmission.

6. The method of claim 5, wherein the default cyclic prefix extension value is used for determining the plurality of extension times, based on the transmit power being greater than or equal to a threshold value.

7. The method of claim 1, wherein the information for the second resource is received as included in base station-to-device control information.

8. The method of claim 7, wherein the base station-to-device control information is received through a base station-to-device physical control channel.

9. The method of claim 1, wherein a reception of the information for the second resource is dynamic resource allocation.

10. The method of claim 1, wherein the end time point of the first resource is a last symbol time point of the first resource.

11. The method of claim 1, wherein the first resource is included in a control resource set.

12. The method of claim 1, further comprising:
performing channel sensing related to a channel access procedure, based on the start time point of the second resource.

13. The method of claim 12, wherein the inter-device transmission is performed based on a result of the channel sensing being IDLE.

14. A first device for performing wireless communication, the first device comprising:
at least one transceiver;
at least one processor; and
at least one memory operably connected to the at least one processor and storing instructions that, based on being executed by the at least one processor, cause the first device to perform operations,
wherein the operations comprise:
receiving, from a base station, information for a second resource for performing an inter-device transmission, based on a first resource; and
determining to perform the inter-device transmission, based on a time interval from an end time point of the first resource to a start time point of the second resource being greater than or equal to a device processing time,
wherein the device processing time includes a first extension time related to cyclic prefix extension, and
wherein the first extension time is a longest extension time among a plurality of extension times related to cyclic prefix extension allowed to the inter-device transmission.

15. A device adapted to control a first user equipment, UE, the device comprising:
at least one processor; and
at least one memory operably connected to the at least one processor and storing instructions that, based on being executed by the at least one processor, cause the first UE to perform operations,
wherein the operations comprise:
receiving, from a base station, information for a second resource for performing an inter-UE transmission, based on a first resource; and
determining to perform the inter-UE transmission, based on a time interval from an end time point of the first resource to a start time point of the second resource being greater than or equal to a UE processing time,
wherein the UE processing time includes a first extension time related to cyclic prefix extension, and
wherein the first extension time is a longest extension time among a plurality of extension times related to cyclic prefix extension allowed to the inter-UE transmission.

16. A non-transitory computer-readable storage medium storing instructions that, based on being executed, cause a first device to:
receive, from a base station, information for a second resource for performing an inter-device transmission, based on a first resource; and
determine to perform the inter-device transmission, based on a time interval from an end time point of the first resource to a start time point of the second resource being greater than or equal to a device processing time,
wherein the device processing time includes a first extension time related to cyclic prefix extension, and
wherein the first extension time is a longest extension time among a plurality of extension times related to cyclic prefix extension allowed to the inter-device transmission.

17. A method for performing, by a second device, wireless communication, the method comprising:
receiving, from a first device, an inter-device transmission, based on a second resource,
wherein the inter-device transmission is determined to be performed based on a time interval from an end time point of a first resource to a start time point of the second resource being greater than or equal to a device processing time,
wherein the first resource is a resource in which information for the second resource is received from a base station to the first device,
wherein the device processing time includes a first extension time related to cyclic prefix extension, and
wherein the first extension time is a longest extension time among a plurality of extension times related to cyclic prefix extension allowed to the inter-device transmission.

18. The method of claim 17, wherein the end time point of the first resource is a last symbol time point of the first resource.

19. A second device for performing wireless communication, the second device comprising:
at least one transceiver;
at least one processor; and
at least one memory operably connected to the at least one processor and storing instructions that, based on being executed by the at least one processor, cause the second device to perform operations,
wherein the operations comprise:
receiving, from a first device, an inter-device transmission, based on a second resource,
wherein the inter-device transmission is determined to be performed based on a time interval from an end time point of a first resource to a start time point of the second resource being greater than or equal to a device processing time,
wherein the first resource is a resource in which information for the second resource is received from a base station to the first device,
wherein the device processing time includes a first extension time related to cyclic prefix extension, and
wherein the first extension time is a longest extension time among a plurality of extension times related to cyclic prefix extension allowed to the inter-device transmission.

20. The second device of claim 19, wherein the end time point of the first resource is a last symbol time point of the first resource.
